# EUROPEAN PATENT SPECIFICATION

(11) **EP 2 757 880 B1**
(45) Date of publication and mention of the grant of the patent: **11.03.2020**
(21) Application number: 12834009.8
(22) Date of filing: 19.09.2012
(51) Int. Cl.: A01N 25/30, A01N 25/04, A01N 57/20, A01P 13/00

(54) **ADJUVANT COMPOSITIONS, AGRICULTURAL PESTICIDE COMPOSITIONS, AND METHODS FOR MAKING AND USING SUCH COMPOSITIONS**
HILFSSTOFFZUSAMMENSETZUNGEN, PESTIZIDZUSAMMENSETZUNGEN FÜR DIE LANDWIRTSCHAFT UND VERFAHREN ZUR VERWENDUNG DERARTIGER ZUSAMMENSETZUNGEN
COMPOSITIONS D'ADJUVANT, COMPOSITIONS DE PESTICIDE AGRICOLE, ET PROCÉDÉS POUR FABRIQUER ET UTILISER DE TELLES COMPOSITIONS

(30) Priority: 19.09.2011 US 201161626037 P
(43) Date of publication of application: 30.07.2014
(73) Proprietor: Rhodia Operations, 93300 Aubervilliers (FR)
(72) Inventor: MCKNIGHT, Michelle, Philadelphia, PA 19114 (US); GOYAL, Rajesh, Bensalem, PA 19020 (US); SHANMUGA, Krish, Murthy, Plainsboro, NJ 08536 (US)
(74) Representative: Elkington and Fife LLP
(86) International application number: PCT/US2012/056043
(87) International publication number: WO 2013/043678

(56) References cited:
- EP-A1- 2 245 931
- EP-A2- 1 023 833
- EP-A2- 1 023 833
- WO-A2-2007/079165
- WO-A2-2009/138523
- GB-A- 2 460 590
- US-A- 3 484 229
- US-A- 4 510 081
- US-A- 5 824 797
- US-A- 5 906 962
- US-A- 6 162 764
- US-A1- 2006 063 676
- US-A1- 2008 200 564
- US-A1- 2010 099 569
- US-B1- 6 274 570
- US-B1- 6 432 884
- US-B1- 6 797 673
- R G Richardson: "Control of Spray Drift with Thickening Agents", Journal of Agricultural Engineering Research, 1 January 1974 (1974-01-01), pages 227-231, XP055175198, Retrieved from the Internet: URL:http://www.sciencedirect.com/science/a rticle/pii/0021863474900614/pdf?md5=d0c0be 2e9c72001c07fb99d72e7d13ac&pid=1-s2.0-0021 863474900614-main.pdf [retrieved on 2015-03-10]

## Description

This application claims the benefit of U.S. Provisional Application No. 61/626,037, filed September 19, 2012.

### Field of the Invention

This invention relates to an adjuvant composition for use in making agricultural pesticide compositions.

### Background of the Invention

Many agricultural pesticides, including insecticides, fungicides, herbicides, miticides, and plant growth regulators, are applied in the form of a liquid composition. In addition to the pesticide, such liquid compositions typically include one or more adjuvant compounds intended to improve one or more properties of the liquid composition, such as for example, storage stability, ease of handling, and/or pesticide efficacy against target organisms.

It has been recognized that drift of spray applied pesticide compositions, that is, physical movement of pesticide spray droplets through air at the time of spray application to a site other than that intended for such application, can expose people, wildlife, and the environment to pesticide residues that may cause health and environmental effects as well as property damage. Water soluble polymers, particularly polysaccharide polymers, such as, for example, guar, guar derivatives, and poly(acrylamide) polymers are known to be effective as deposition aids, such as, e.g., drift control agents, and/or anti-rebound agents in spray applied agricultural pesticide compositions, see, for example, US Patent No. 5,550,224, (Hazen), US Patent No. 5,874,096 (Hazen), and US Patent No. 6,391,962 (Zerrer et. al.).

In many applications, a polysaccharide polymer in the form of a dry powder is added to an aqueous pesticide composition in the field and dissolved by mixing the composition.

In some applications, it would desirable to provide an adjuvant concentrate that has a high content of water soluble polymer and that could simply be diluted to the desired end-use concentration. However, in some cases, such as those in which the relatively high concentrations of water soluble polymer and other adjuvant compounds results in an adjuvant composition that is nonhomogeneous, unstable, and/or difficult to handle, for example, due to intractably high viscosity, this approach may not be feasible and/or convenient.

EP 1,023,833 (Aven) describes an emulsifiable concentrate for crop protection active compounds which comprises one or more crop protection active compounds, one or more adjuvants, an emulsifying surfactant system which essentially consists of one or more non-ionic surfactants, and one or more anionic surfactants and a water-miscible polar aprotic solvent or one or more dimethyl dicarboxylates.

EP 2,245,931 (Kozuki et. al.) describes an emulsifiable concentrate composition containing a hydrophobic agrochemically active compound, a surfactant, an aromatic hydrocarbon solvent, methyl oleate, and 1,3-dimethyl-2-imidazolidinone.

WO 2009/138523 (Keiper et. al.) describes a formulated composition comprising (A) at least one solid active ingredient and (B) at least one non-ionic surface active compound, one or more customary formulation auxiliaries, and water; wherein active ingredient (A) is suspended or dispersed in the water.

US Patent No. 2006/0063676 (Brigance et. al.) describes a method for enhancing the deposition of an agrochemical onto an agricultural substrate by applying a sufficient amount of an aqueous microemulsion of an agrochemical and a surface active agent by an air induction spray.

US Patent No. 6,797,673 (Worthley et. al.) describes a formulated composition comprising lecithin, a methyl ester and a non-ionic surfactant.

GB 2,460,590 (Ogawa et. al.) describes an adjuvant composition comprising the following components (A) and (8): (A) a sodium dialkylsulfosuccinate and a poly(oxyethylene) alkyl ether; and (8) a pour point depressant.

R G Richardson: Control of Spray Drift with Thickening Agents, Journal of Agricultural Engineering Research, 1 January 1974, pages 227-231 describes the effectiveness of two thickening agents, Norbak and Vistik, in controlling spray drift.

US Patent No. 3,484,229 (Floyd) describes biologically active easily sprayable compositions having low spray drift properties including water, a biologically active agent, and a microbial polysaccharide gum produced by fermentation of *Arthrobacter viscous* NRRL B-1973 or *Arthrobacter viscous* NRRL B-1797.

WO 2007/079165 (Smith) describes an aqueous agricultural pesticide composition containing: (a) a water soluble or water dispersible deposition control agent, in an amount effective to provide improved anti-rebound properties and selected from: (i) dextrins and tamarind gums, (ii) derivatized polysaccharide hydrocolloids, except derivatized guars, having a molecular substitution of greater than or equal to about 0.1, (iii) proteinaceous hydrocolloids, (iv) lignins and lignin derivatives, except alkali metal, alkaline earth metal or ammonium lignosulphonates, and (v) lipid polymers, and (b) an effective amount of a pesticide.

US 5 824 797 (Hazen) describes the use of selected non-visco-elastic amounts of guar, one or more derivatives of guar or combinations thereof to reduce aerial spray or discharge drift, improve deposition and enhance bioefficacy in aqueous compositions.

There is a continuing interest in concentrated adjuvant compositions that exhibit improved stability and handling properties and can be readily combined with pesticide and diluted with water to form efficacious aqueous pesticide compositions that may be spray applied to target pests.

### Summary of the Invention

In a first aspect, the present invention is directed to an agricultural adjuvant composition, comprising, based on 100 pbw of the adjuvant composition:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants;
(b) at least one of
   (b)(i) one or more second nonionic surfactants selected from the group consisting of polyalkoxylated alkylphenol surfactants, polyalkoxylated alkarylphenol surfactants, amine oxide surfactants, alkanolamide surfactants, and glycoside surfactants, and/or
   (b)(ii) one or more anionic surfactants,
   wherein the one or more first nonionic surfactants (a) and the one or more second nonionic surfactants (b)(i) are present in a combined amount of 5 pbw to 30 pbw;
(c) 50 pbw to 85 pbw of a liquid medium comprising one or more fatty acid (C₁-C₃)alkyl esters;
(d) 1 pbw to 20 pbw of one or more water soluble deposition aid polymers selected from guars and guar derivatives; and
(e) greater than 0 pbw to 10 pbw of one or more thickening agents selected from silica, inorganic colloidal or colloid-forming clay particles.

The agricultural adjuvant composition of the present invention comprises the liquid medium (c) and the deposition aid polymer (d) and that unexpectedly exhibits good stability, low viscosity, improved ease of handling, and excellent dispersibility in water.

In a second aspect, the present invention is directed to a method for making an adjuvant composition of the present invention, comprising the steps of:
(1) dispersing at least a portion of the one or more thickening agents (e), in the liquid medium (c) to form a thickened liquid medium,
(2) dispersing the one or more first nonionic surfactants (a) and the at least one of the one or more second nonionic surfactants (b)(i) or one or more anionic surfactants (b)(ii), in the thickened liquid medium, and
(3) dispersing the one or more water soluble deposition aid polymers (d) in the thickened liquid medium.

In an third aspect, the present invention is directed to a method for making an aqueous end use pesticide composition, comprising combining the above described adjuvant composition with water and with one or more pesticide compounds.

In a fourth aspect, the present invention is directed to a method for controlling a target pest, comprising combining the above described adjuvant composition with water and with one or more pesticide compounds to make an aqueous end use pesticide composition and applying the aqueous end use pesticide composition to the target pest and/or to the environment of the target pest.

In an fifth aspect, the present invention is directed to a concentrated pesticide composition, comprising, based on 100 pbw of the composition:
(a) 0.16 pbw to 34 pbw of one or more first nonionic surfactants selected from the group consisting of fatty acid glycol ester surfactants, polyalkoxylated triglyceride surfactants, alkoxylated fatty alcohol surfactants, and sorbitan fatty acid ester surfactants;
(b) greater than 0 pbw to 15 pbw of at least one of:
   (b)(i) one or more second nonionic surfactants selected from the group consisting of polyalkoxylated alkylphenol surfactants, polyalkoxylated alkarylphenol surfactants, amine oxide surfactants, alkanolamide surfactants, glycoside surfactants, and/or
   (b)(ii) one or more anionic surfactants;
(c) 0.25 pbw to 97.5 pbw of a liquid medium comprising one or more fatty acid (C₁-C₃)alkyl esters;
(d) greater than 0 pbw to 30 pbw of one or more water soluble deposition aid polymers selected from guars and guar derivatives;
(e) one or more thickening agents selected from silica, inorganic colloidal or colloid-forming clay particles; and
(f) 2 pbw to 90 pbw of one or more pesticide compounds.

In an sixth aspect, the present invention is directed to an end use pesticide composition, comprising, based on 100 pbw of the composition:
(a) 0.016 pbw to 3.4 pbw of one or more first nonionic surfactants selected from the group consisting of fatty acid glycol ester surfactants, polyalkoxylated triglyceride surfactants, alkoxylated fatty alcohol surfactants, and sorbitan fatty acid ester surfactants;
(b) greater than 0 pbw to 0.15 pbw of at least one of
   (b)(i) one or more second nonionic surfactants selected from the group consisting of polyalkoxylated alkylphenol surfactants, polyalkoxylated alkarylphenol surfactants, amine oxide surfactants, alkanolamide surfactants, glycoside surfactants, and/or
   (b)(ii) one or more anionic surfactants;
(c) 0.95 pbw to 9.75 pbw of a liquid medium comprising one or more fatty acid (C₁-C₃)alkyl esters;
(d) greater than 0 pbw to 0.5 pbw of one or more water soluble deposition aid polymers selected from guars and guar derivatives;
(e) one or more thickening agents selected from silica, inorganic colloidal or colloid-forming clay particles;
(f) 0.2 pbw to 9 pbw of one or more pesticide compounds; and
(g) water.

In a seventh aspect, the present invention is directed to method for improving the drift control properties of an aqueous end use pesticide composition, comprising:
spray applying the aqueous end use pesticide composition comprising the composition according to claim 1 to a target pest and/or to the environment of the target pest,
wherein the spray applied aqueous end use pesticide composition exhibits improved drift control compared to an analogous spray applied aqueous end use pesticide composition that lacks the surfactants (a) and (b), the liquid medium (c) and/or the water soluble deposition aid polymer (d).

The end use pesticide composition provides improved spray drift control when spray applied.

### Brief Description of the Drawings

FIGURE 1 shows a plot of room temperature viscosity, expressed in Pascal seconds (Pa.s), versus time for the composition of Example 1
FIGURE 2 shows a plot of viscosity, expressed in Pascal-seconds (Pa.s), and shear stress, expressed in Pascals (Pa), vs. shear rate (in reciprocal seconds (1/s)) for the composition of Example 1.
FIGURE 3 shows a plot of room temperature viscosity, expressed in Pascal seconds (Pa.s), versus time for the composition of Example 5.
FIGURE 4 shows a plot of viscosity, expressed in Pascal-seconds (Pa.s), and shear stress, expressed in Pascals (Pa), vs. shear rate (in reciprocal seconds (1/s)) for the composition of Example 5.
FIGURE 5 shows a plot of room temperature viscosity, expressed in Pascal seconds (Pa.s), versus time for the composition of Example 6.
FIGURE 6 shows a plot of viscosity, expressed in Pascal-seconds (Pa.s), and shear stress, expressed in Pascals (Pa), vs. shear rate (in reciprocal seconds (1/s)) for the composition of Example 6.

### Detailed Description of Invention and Preferred Embodiments

As used herein, the term "alkyl" means a saturated straight chain or branched chain hydrocarbon radical, such as for example, methyl, ethyl, n-propyl, iso-propyl, n-butyl, sec-butyl, t-butyl, pentyl, n-hexyl.

As used herein, the term "alkoxyl" means an oxy group substituted with an alkyl group, such as, for example, methoxyl, ethyoxyl, propoxyl.

As used herein, the term "cycloalkyl" means a saturated cyclic hydrocarbon radical, such as, for example, cyclopentyl, cyclohexyl.

As used herein, the term "hydroxyalkyl" means a saturated straight chain or branched chain hydrocarbon radical substituted one or more carbon atoms with a hydroxyl group, such as for example, hydroxymethy, hydroxyethyl, hydroxypropyl.

As used herein, the term "alkenyl" means an unsaturated straight chain, branched chain, or cyclic hydrocarbon radical that contains one or more carbon-carbon double bonds, such as, for example, ethenyl, 1-propenyl, and 2-propenyl.

As used herein, the term "aryl" means a monovalent unsaturated hydrocarbon radical containing one or more six-membered carbon rings in which the unsaturation may be represented by three conjugated double bonds, which may be substituted one or more of carbons of the ring with hydroxy, alkyl, alkenyl, halo, haloalkyl, or amino, such as, for example, phenoxy, phenyl, methylphenyl, dimethylphenyl, trimethylphenyl, chlorophenyl, trichloromethylphenyl, aminophenyl, and tristyrylphenyl.

As used herein, the term "aralkyl" means an alkyl group substituted with one or more aryl groups, such as, for example, phenylmethyl, phenylethyl, and triphenylmethyl.

As used herein, the term "alkylamido" means amido radical, substituted with an alkyl group, such as dodecylamido, tetradecylamido.

As used herein, the term "alkylamidoalkyl" means an alkyl group substituted with an alkylamido group, such as dodecylamidoalkyl, tetradecylamidoalkyl.

As used herein, the term "oxyalkylene" means a bivalent straight or branched acyclic ether or polyether radical such as, for example, oxyethylene, poly(oxyethylene), oxypropylene, poly(oxypropylene), poly(oxyethylene-oxypropylene), wherein the oxyethylene and oxy propylene units may be arranged in random order or in blocks.

As used herein, the terminology "(Cₘ-Cₙ)" in reference to an organic group, wherein m and n are each integers, indicates that the group may contain from m carbon atoms to n carbon atoms per group.

As used herein, the term "agronomically acceptable salts" refers to salts prepared from agronomically acceptable non-toxic bases or acids including inorganic or organic bases and inorganic or organic acids. Typical agronomically acceptable salts the compound referred to herein comprise an anion derived from the compound, for example, by deprotonation of a hydroxy or hydroxyalkyl substituent, and one or more positively charged counterions. Suitable positively charged counterions include inorganic cations and organic cations, such as for example, sodium cations, potassium cations, calcium cations, magnesium cations, isopropylamine cations, ammonium cations, and tetraalkylammonium cations.

References herein to saccharide compounds and moieties, such as, for example, glycosides, polyglycosides, and residues thereof, include, unless otherwise explicitly limited, all linear and cyclized forms of the saccharide compound or moiety, as well as isomers thereof.

As used herein, the term "surfactant" means an amphiphilic compound that comprises a hydrophilic moiety and a hydrophobic moiety and that, when present in water, lowers the surface tension of the water.

As used herein, "liquid medium" means a medium that is in the liquid phase at a temperature of 25°C and a pressure of one atmosphere. The liquid medium may be a non-aqueous liquid medium or an aqueous liquid medium.

In one embodiment, the liquid medium is a non-aqueous liquid medium. As used herein, the terminology "non-aqueous medium" means a single phase liquid medium that contains no more than trace amounts of water, typically, based on 100 parts by weight ("pbw") of the non-aqueous medium, no more than 0.1 pbw water.

In one embodiment, the liquid medium is an aqueous liquid medium. As used herein, the terminology "aqueous medium" means a single phase liquid medium that contains more than a trace amount of water, typically, based on 100 pbw of the aqueous medium, from about 0.1 pbw to about 100 pbw water, more typically greater than or equal to 50 pbw to 100 pbw water. The aqueous medium may, optionally, further comprise water soluble or water miscible components dissolved in the aqueous medium. The terminology "water miscible" as used herein means miscible in all proportions with water. Suitable water miscible organic liquids include, for example, (C₁-C₃)alcohols, such as methanol, ethanol, propanol, and (C₁-C₃)polyols, such as glycerol, ethylene glycol, propylene glycol, and diethylene glycol. The composition of the present invention may, optionally, further comprise one or more water insoluble or water immiscible components, such as a water immiscible organic liquid, wherein the combined aqueous medium and water insoluble or water immiscible components form a micro emulsion, or a multi-phase system such as, for example, an emulsion, a suspension or a suspo-emulsion, in which the aqueous medium is in the form of a discontinuous phase dispersed in a continuous phase of the water insoluble or water immiscible component, or, more typically, the water insoluble or water immiscible component is in the form of a discontinuous phase dispersed in a continuous phase of the aqueous medium.

As used herein, the terminology "end use pesticide composition" means a pesticide composition that contains pesticide in amount effective to control a target pest, such as, for example, a target plant, fungus, bacterium, or insect, when the pesticide composition is spray applied to the pest and/or to the environment of the pest at a given application rate and the terminology "pesticide concentrate composition" means a composition that contains a relatively high concentration of pesticide that is suitable to be diluted with an aqueous diluent, typically water, to form an aqueous end use pesticide composition.

As used herein, the terminology "effective amount" in reference to the relative amount of a pesticide in a pesticide composition means the relative amount of pesticide that is effective to control a target pest, for example, a target plant, fungus, bacterium, or insect, when the pesticide composition is applied to the pest and/or to the environment of the pest at a given application rate and the terminology "herbicidally effective amount" in reference to the relative amount of herbicide in an herbicidal composition means the relative amount that is effective to control growth of a target plant when the herbicidal composition is spray applied to the target plant and/or to the environment of the plant at a given application rate.

As used herein, the term "drift" refers to off-target movement of droplets of a pesticide composition that is applied to a target pest or environment for the pest. Spray applied compositions typically exhibit decreasing tendency to drift with decreasing relative amount, typically expressed as a volume percentage of total spray applied droplet volume, of small size spray droplets, that is, spray droplets having a droplet size below a given value, typically, a droplet size of less than 150 micrometers ("µm"). Spray drift of pesticides can have undesirable consequences, such as for example, unintended contact of phytotoxic pesticides with non-pest pest plants, such as crops or ornamental plants, with damage to such non-pest plants.

As used herein, the terminology "an amount effective as a drift control agent" in reference to the drift control surfactant component of the present invention means an amount of such surfactant that, when added to a given aqueous pesticide composition and the combined aqueous pesticide composition and drift control surfactant is spray applied, is effective to reduce spray drift of the spray applied composition. Typically, the ability of a given amount of a drift control surfactant to reduce spray drift of a spray applied composition is evaluated by spray applying, under the same spray conditions, a pesticide composition that contains the given amount of the drift control surfactant and an analogous pesticide composition that lacks the drift control surfactant and then comparing the relative amount of small size spray droplets exhibited by spray applied compositions, with a reduction in the amount of small size spray droplets being indicative of the ability to reduce spray drift of the spray applied composition.

As used herein, the terminology "deposition aid" means a material that, when used as an ingredient in a pesticide composition that is spray applied to a target, improves deposition of the pesticide composition on the target and includes drift control agents, anti-rebound agents and sticking agents, "drift control agent" means a material that, when used as an ingredient in a pesticide composition that is spray applied to a target, tends to reduce physical movement of pesticide spray droplets through air at the time of spray application to a site other than that intended for such application, and "anti-rebound agent" means a material that, when used as an ingredient in a pesticide composition that is spray applied to a target, tends to reduce rebound of the spray droplets at the time of initial contact with the target.

In one embodiment, the agricultural adjuvant composition of the present invention comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants, and
(b) at least one of:
   (b)(i) one or more second nonionic surfactants selected from the group consisting of polyalkoxylated alkylphenol surfactants polyalkoxylated alkarylphenol surfactants, amine oxide surfactants, alkanolamide surfactants, and glycoside surfactants, or
   (b)(ii) one or more anionic surfactants,
provided that, if the composition comprises one or more first nonionic surfactants (a) selected from alkoxylated castor oil surfactants and sorbitan fatty acid ester surfactants, then the composition must comprise at least one of (P1) or (P2):
(P1) one or more second nonionic surfactants (b)(i) selected from the group consisting of polyalkoxylated alkarylphenol surfactants, amine oxide surfactants, alkanolamide surfactants, and glycoside surfactants, or
(P2) one or more anionic surfactants (b)(ii) selected from alkyl sulfonate surfactants, alkyl ether sulfonate surfactants, alkyl carboxylate surfactants, alkyl ether carboxylate surfactants, alkyl sulfosuccinate surfactants, alkyl ether sulfosuccinate surfactants, glutamate surfactants, isethionate surfactants, taurate surfactants, and sarcosinate surfactants.

In a second embodiment, the agricultural adjuvant composition of the present invention comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants, and
(b)(i) one or more second nonionic surfactants selected from the group consisting of polyalkoxylated alkylphenol surfactants polyalkoxylated alkarylphenol surfactants, amine oxide surfactants, alkanolamide surfactants, and glycoside surfactants,
provided that, if the composition comprises one or more first nonionic surfactants (a) selected from alkoxylated castor oil surfactants and sorbitan fatty acid ester surfactants, then the composition must comprise one or more second nonionic surfactants (b)(i) selected from the group consisting of polyalkoxylated alkarylphenol surfactants, amine oxide surfactants, alkanolamide surfactants, and glycoside surfactants.

In a third embodiment, the agricultural adjuvant composition of the present invention comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants, and
(b)(ii) one or more anionic surfactants,
provided that, if the composition comprises one or more first nonionic surfactants (a) selected from alkoxylated castor oil surfactants and sorbitan fatty acid ester surfactants, then the composition must comprise one or more anionic surfactants (b)(ii) selected from alkyl sulfonate surfactants, alkyl ether sulfonate surfactants, alkyl carboxylate surfactants, alkyl ether carboxylate surfactants, alkyl sulfosuccinate surfactants, alkyl ether sulfosuccinate surfactants, glutamate surfactants, isethionate surfactants, taurate surfactants, and sarcosinate surfactants.

In a fourth embodiment, the agricultural adjuvant composition of the present invention comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants,
(b)(i) one or more second nonionic surfactants selected from the group consisting of polyalkoxylated alkylphenol surfactants polyalkoxylated alkarylphenol surfactants, amine oxide surfactants, alkanolamide surfactants, and glycoside surfactants, and
(b)(ii) one or more anionic surfactants,
provided that, if the composition comprises one or more first nonionic surfactants (a) selected from alkoxylated castor oil surfactants and sorbitan fatty acid ester surfactants, then the composition must comprise at least one of (P1) or (P2):
(P1) one or more second nonionic surfactants (b)(i) selected from the group consisting of polyalkoxylated alkarylphenol surfactants, amine oxide surfactants, alkanolamide surfactants, and glycoside surfactants, or
(P2) one or more anionic surfactants (b)(ii) selected from alkyl sulfonate surfactants, alkyl ether sulfonate surfactants, alkyl carboxylate surfactants, alkyl ether carboxylate surfactants, alkyl sulfosuccinate surfactants, alkyl ether sulfosuccinate surfactants, glutamate surfactants, isethionate surfactants, taurate surfactants, and sarcosinate surfactants.

In fifth embodiment, the agricultural adjuvant composition of the present invention comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants,
(b) at least one of:
   (b)(i) one or more second nonionic surfactants selected from the group consisting of polyalkoxylated alkylphenol surfactants polyalkoxylated alkarylphenol surfactants, amine oxide surfactants, alkanolamide surfactants, and glycoside surfactants, or
   (b)(ii) one or more anionic surfactants, and
(c) a liquid medium comprising one or more fatty acid (C₁-C₃)alkyl esters, provided that, if the composition comprises one or more first nonionic surfactants (a) selected from alkoxylated castor oil surfactants and sorbitan fatty acid ester surfactants, then the composition must comprise at least one of (P1) or (P2):
   (P1) one or more second nonionic surfactants (b)(i) selected from the group consisting of polyalkoxylated alkarylphenol surfactants, amine oxide surfactants, alkanolamide surfactants, and glycoside surfactants, or
   (P2) one or more anionic surfactants (b)(ii) selected from alkyl sulfonate surfactants, alkyl ether sulfonate surfactants, alkyl carboxylate surfactants, alkyl ether carboxylate surfactants, alkyl sulfosuccinate surfactants, alkyl ether sulfosuccinate surfactants, glutamate surfactants, isethionate surfactants, taurate surfactants, and sarcosinate surfactants.

In a sixth embodiment, the agricultural adjuvant composition of the present invention comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants,
(b)(i) one or more second nonionic surfactants selected from the group consisting of polyalkoxylated alkylphenol surfactants polyalkoxylated alkarylphenol surfactants, amine oxide surfactants, alkanolamide surfactants, and glycoside surfactants, and
(c) a liquid medium comprising one or more fatty acid (C₁-C₃)alkyl esters,
wherein, if the composition comprises one or more first nonionic surfactants (a) selected from alkoxylated castor oil surfactants and sorbitan fatty acid ester surfactants, then the composition typically comprises one or more second nonionic surfactants (b)(i) selected from the group consisting of polyalkoxylated alkarylphenol surfactants, amine oxide surfactants, alkanolamide surfactants, and glycoside surfactants.

In a seventh embodiment, the agricultural adjuvant composition of the present invention comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants,
(b)(ii) one or more anionic surfactants, and
(c) a liquid medium comprising one or more fatty acid (C₁-C₃)alkyl esters,
wherein, if the composition comprises one or more first nonionic surfactants (a) selected from alkoxylated castor oil surfactants and sorbitan fatty acid ester surfactants, then the composition typically comprises one or more anionic surfactants (b)(ii) selected from alkyl sulfonate surfactants, alkyl ether sulfonate surfactants, alkyl carboxylate surfactants, alkyl ether carboxylate surfactants, alkyl sulfosuccinate surfactants, alkyl ether sulfosuccinate surfactants, glutamate surfactants, isethionate surfactants, taurate surfactants, and sarcosinate surfactants.

In an eighth embodiment, the agricultural adjuvant composition of the present invention comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants,
(b)(i) one or more second nonionic surfactants selected from the group consisting of polyalkoxylated alkylphenol surfactants polyalkoxylated alkarylphenol surfactants, amine oxide surfactants, alkanolamide surfactants, and glycoside surfactants,
(b)(ii) one or more anionic surfactants, and
(c) a liquid medium comprising one or more fatty acid (C₁-C₃)alkyl esters, wherein, if the composition comprises one or more first nonionic surfactants (a) selected from alkoxylated castor oil surfactants and sorbitan fatty acid ester surfactants, then the composition typically comprises at least one of (P1) or (P2):
   (P1) one or more second nonionic surfactants (b)(i) selected from the group consisting of polyalkoxylated alkarylphenol surfactants, amine oxide surfactants, alkanolamide surfactants, and glycoside surfactants, or
   (P2) one or more anionic surfactants (b)(ii) selected from alkyl sulfonate surfactants, alkyl ether sulfonate surfactants, alkyl carboxylate surfactants, alkyl ether carboxylate surfactants, alkyl sulfosuccinate surfactants, alkyl ether sulfosuccinate surfactants, glutamate surfactants, isethionate surfactants, taurate surfactants, and sarcosinate surfactants.

Also disclosed, the agricultural adjuvant composition comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants,
(b) at least one of:
   (b)(i) one or more second nonionic surfactants selected from the group consisting of polyalkoxylated alkylphenol surfactants polyalkoxylated alkarylphenol surfactants, amine oxide surfactants, alkanolamide surfactants, and glycoside surfactants, or
   (b)(ii) one or more anionic surfactants,
(c) a liquid medium comprising one or more fatty acid (C₁-C₃)alkyl esters,
(d) one or more water soluble deposition aid polymers, and
(e) one or more thickening agents.

Also disclosed, the agricultural adjuvant composition comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants,
(b)(i) one or more second nonionic surfactants selected from the group consisting of polyalkoxylated alkylphenol surfactants polyalkoxylated alkarylphenol surfactants, amine oxide surfactants, alkanolamide surfactants, and glycoside surfactants,
(c) a liquid medium comprising one or more fatty acid (C₁-C₃)alkyl esters,
(d) one or more water soluble deposition aid polymers, and
(e) one or more thickening agents.

Also disclosed, the agricultural adjuvant composition comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants,
(b)(ii) one or more anionic surfactants, more typically selected from alkyl sulfonate surfactants, alkyl ether sulfonate surfactants, alkyl carboxylate surfactants, alkyl ether carboxylate surfactants, alkyl sulfosuccinate surfactants, alkyl ether sulfosuccinate surfactants, glutamate surfactants, isethionate surfactants, taurate surfactants, and sarcosinate surfactants,
(c) a liquid medium comprising one or more fatty acid (C₁-C₃)alkyl esters,
(d) one or more water soluble deposition aid polymers, and
(e) one or more thickening agents,

Also disclosed, the agricultural adjuvant composition comprises:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants, more typically from fatty acid glycol ester surfactants and alkoxylated fatty alcohol surfactants,
(b)(i) one or more second nonionic surfactants selected from the group consisting of from polyalkoxylated alkylphenol surfactants polyalkoxylated alkarylphenol surfactants, amine oxide surfactants, alkanolamide surfactants and glycoside surfactants,
(b)(ii) one or more anionic surfactants, more typically selected from alkyl sulfonate surfactants, alkyl ether sulfonate surfactants, alkyl carboxylate surfactants, alkyl ether carboxylate surfactants, alkyl sulfosuccinate surfactants, alkyl ether sulfosuccinate surfactants, glutamate surfactants, isethionate surfactants, taurate surfactants, and sarcosinate surfactants,
(c) a liquid medium comprising one or more fatty acid (C₁-C₃)alkyl esters,
(d) one or more water soluble deposition aid polymers, and
(e) one or more thickening agents

The adjuvant composition of the present invention comprises one or more nonionic surfactants (a), selected from the group consisting of fatty acid glycol ester surfactants, polyalkoxylated triglyceride surfactants, alkoxylated fatty alcohol surfactants, and sorbitan fatty acid ester surfactants.

Suitable fatty acid glycol ester surfactants include glycol fatty acid monoesters and glycol fatty acid diesters, more typically mono- and di-esters of glycol s and saturated or unsaturated (C₈-C₂₂), more typically (C₁₂-C₁₈), fatty acids and mixtures thereof, even more typically mono- and di-esters of poly(ethylene glycol) or poly(propylene glycol) and saturated or unsaturated (C₈-C₂₂), more typically (C₁₂-C₁₈), fatty acids and mixtures thereof, such as for example, poly(ethylene glycol) monomyristates, poly(ethylene glycol) monostearates, poly(ethylene glycol) distearates, poly(ethylene glycol) monooleates, poly(ethylene glycol) dioleates poly(propylene glycol) monooleates, and poly(ethylene glycol) linolenates, poly(ethylene glycol) dibehenates, poly(ethylene glycol) monobehenates poly(ethylene glycol) monoerucates.

Suitable polyalkoxylated triglycerides include, for example, glycerol fatty acid triesters that have been alkoxylated with from 2 or more moles of (C₂-C₄)alkylene oxide units per molecule, as well as alkyl esters of thereof, including alkoxylated soybean oils, alkoxylated rapeseed oils, alkoxylated cottonseed oils, and alkoxylated castor oils, as well as alkyl esters thereof. Suitable alkoxylated castor oils include, for example, polyethoxylated castor oils, polypropoxylated castor oils, and polyethoxylated-propoxylated castor oils, ethoxylated castor oil oleate, and ethoxylated castor oil trilaurate.

Suitable alkoxylated fatty alcohol surfactants, include linear or branched, saturated or unsaturated (C₆-C₂₂), more typically (C₁₀-C₂₂), alcohols, such as, for example, lauryl alcohol, tridecyl alcohol, cetyl alcohol, stearyl alcohol, and oleyl alcohol, that are alkoxylated with, for example, from 1 to 50, more typically 2 to 50, oxyalkylene units per molecule, such as, for example, ethoxylated lauryl alcohol, ethoxylated cetyl alcohol, ethoxylated tridecyl alcohol, ethoxylated stearyl alcohol, and ethoxylated oleyl alcohol. In one embodiment, the alkoxylated fatty alcohol surfactant comprises an alkoxylated branched (C₁₀-C₂₂) alcohol, such as an ethoxylated tridecyl alcohol.

Suitable sorbitan alkyl ester surfactants are known compounds, and include non-alkoxylated sorbitan esters, typically referred to as "Span" surfactants, such as, for example, sorbitan monolaurate (Span 20), sorbitan monopalmitate (Span 40), sorbitan tristearate (Span 65), sorbitan monooleate (Span 80) and polyoxyalkylene glycol sorbitan alkyl esters, typically referred to as "tween" or "polysorbate" surfactants, such as, for example, polyoxyethylene (20) sorbitan monolaurate (Tween 20 or Polysorbate 20), polyoxyethylene (20) sorbitan monopalmitate (Tween 40 or Polysorbate 40) polyoxyethylene (20) sorbitan monostearate (Tween 60 or Polysorbate 60), polyoxyethylene (20) sorbitan monooleate (Tween 80 or Polysorbate 80).

In one embodiment, the adjuvant composition of the present invention comprises one or more first nonionic surfactants selected from fatty acid glycol ester surfactants, polyalkoxylated triglyceride surfactants, and alkoxylated fatty alcohol surfactants.

In one embodiment, the adjuvant composition of the present invention comprises one or more second nonionic surfactants selected from selected from polyalkoxylated alkylphenol surfactants, polyalkoxylated alkarylphenol surfactants, amine oxide surfactants, alkanolamide surfactants, and glycoside surfactants.

Suitable polyalkoxylated alkylphenol surfactants and polyalkoxylated alkarylphenol surfactants include alkylphenols, such as octylphenol and nonyl phenol and alkarylphenols, such as tristryrylphenol, that are polyalkoxylated, typically with from 2 to 50 oxyalkylene units, such as oxyethylene units, oxypropylene units, or a mixture thereof, per molecule and include, for example polyalkoxylated octylphenols, polyalkoxylated nonylphenols polyalkoxylated laurylphenols, and polyalkoxylated tristyrylphenol, such as polyethoxylated octylphenols, polyethoxylated nonylphenols, and polyethoxylated tristyrylphenols.

Suitable amine oxide surfactants are known compounds and include, for example, lauramine oxide, cocamine oxide, stearamine oxide, stearamidopropylamine oxide, palmitamidopropylamine oxide, decylamine oxide

Suitable alkanolamide surfactants are known compounds and include, for example, cocamide DEA, cocamide MEA, cocamide MIPA, PEG-5 cocamide MEA, lauramide DEA.

Suitable glycoside surfactants are known compounds and include, for example, (C₄-C₂₂)alkylhexosides, such as butylglucoside, nonylglucoside, decylglucoside, dodecylglucoside, hexadecylglucoside, octadecylglucoside, (C₄-C₂₂)alkylpolyhexosides, such as butylpolyglucosides, nonylpolyglucosides, decylpolyglucosides, tetradecylpolyglucosides, hexadecylpolyglucosides, erucylpolyglucosides, (C₄-C₂₂)alkylpentosides, such as nonylarabinosides, decylarabinoside, hexadecylarabinoside, octylxyloside, nonylxyloside, decylxyloside, hexadecylxyloside, erucylxyloside, and (C₄-C₂₂)alkylpolypentosides, such as butylpolyarabinosides, nonylpolyarabinosides, decylpolyarabinosides, hexadecylpolyarabinosides, octadecylpolyarabinosides, erucylpolyarabinosides, butylpolyxylosides, nonylpolyxylosides, decylpolyxylosides, octadecylpolyxylosides, and erucylpolyxylosides butylpoly(arabino-co-xylo)sides, nonylpoly(arabino-co-xylo)sides, decylpoly(arabino-co-xylo)sides, hexadecylpoly(arabino-co-xylo)sides, octadecylpoly(arabino-co-xylo)sides, erucylpoly(arabino-co-xylo)sides, and mixtures of any of such compounds, wherein the terminology "poly(arbino-co-xylo)side" denotes a copolymeric chain of monomeric residues of arabinose and xylose.

Poly(oxyethylene-oxypropylene) block copolymer surfactants are known compounds, typically referred to as "Poloxamers" and are linear triblock polymers comprising a hydrophilic poly(oxypropylene) segment disposed between two hydrophilic poly(oxyethylene) segments and include, for example, poloxamer 181.

The adjuvant composition of the present invention comprises, based on 100 pbw of the adjuvant composition: from about 5 pbw, more typically from about 8 pbw, and even more typically from about 10 pbw, to about 30 pbw, more typically about 25 pbw, and even more typically about 20 pbw, of a combined amount of the one or more of the first nonionic surfactants (a) and the one or more second nonionic surfactants (b)(i),

In one embodiment, the combined amount of the one or more of the first nonionic surfactants (a) and one or more second nonionic surfactants (b)(i) comprises, based on 100 pbw of such combined amount:
(a) from about 65 pbw, more typically from about 75 pbw, and even more typically from about 85 pbw, to about 100 pbw, more typically about 98 pbw, and even more typically about 95 pbw, of the one or more first nonionic surfactants, and
(b)(i) from 0 pbw, more typically from about 2 pbw, and even more typically from about 5 pbw, to about 35 pbw, more typically about 25 pbw, and even more typically about 15 pbw, of the one or more second nonionic surfactants.

In one embodiment, the adjuvant composition of the present invention comprises one or more second nonionic surfactants selected from polyalkoxylated alkarylphenol surfactants, amine oxide surfactants, alkanolamide surfactants, and glycoside surfactants.

In one embodiment, the adjuvant composition of the present invention further comprises one or more anionic surfactants. In one embodiment, the one or more anionic surfactants enhance, in combination with the nonionic surfactant component of the composition, the dispersion of the adjuvant composition in water, such as for example, by increasing, upon addition of the adjuvant composition to a volume of water and compared to an analogous composition that lacks the anionic surfactant, the rate at which the oil component of the composition of the present invention is dispersed in the volume of water. It is believed that the combined nonionic surfactant and anionic surfactant of the adjuvant composition facilitate rapid dispersion of the oil component of the adjuvant composition, as well as other organic components, in water by reducing the oil/water surface tension to a level below that which is achieved using only the nonionic surfactant component.

Anionic surfactants are generally known and include, for example, alkaryl sulfonate surfactants, alpha olefin sulfonate surfactants, paraffin sulfonate surfactants, alkyl sulfonate surfactants, alkyl ether sulfonate surfactants, alkyl sulfate surfactants, alkyl ether sulfate surfactants, alkyl carboxylate surfactants, alkyl ether carboxylate surfactants, monoalkyl phosphate surfactants, monoalkyl ether phosphate surfactants, dialkyl phosphate surfactants, dialkyl ether phosphate surfactants, alkyl sulfosuccinate surfactants, alkyl ether sulfosuccinate surfactants, glutamate surfactants, isethionate surfactants, taurate surfactants, and sarcosinate surfactants, including salts of and mixtures of such compounds. In one embodiment, the cationic counterion of an anionic surfactant in salt form is typically selected from sodium, potassium, lithium, calcium, magnesium, ammonium, (C₁-C₆)alkyl ammonium cations.

Suitable alkyaryl sulfonate surfactants, alkyl sulfonate surfactants, alkyl ether sulfonate surfactants, alpha olefin sulfonate surfactants, paraffin sulfonate surfactants, and alkenyl sulfonate surfactants include, for example, calcium dodecylbenzene sulfonate, sodium octadecylphenyl sulfonate, isopropylamine dodecyl benzene sulfonate, sodium xylene sulfonate, sodium (C₁₄-C₁₆)alpha olefin sulfonate, sodium tridecyl benzene sulfonate, and sodium dodecyl benzene sulfonate, disodium alkyldiphenyloxide disulfonates.

Suitable alkyl sulfate surfactants and alkyl ether sulfate surfactants include, for example, sodium lauryl sulfate, ammonium lauryl sulfate, ammonium laureth sulfate, triethanolamine laureth sulfate, monoethanolamine laureth sulfate, diethanolamine lauryl sulfate, diethanolamine laureth sulfate, lauric monoglyceride sodium sulfate, sodium laureth sulfate, potassium lauryl sulfate, potassium laureth sulfate, sodium trideceth sulfate, and ammonium tridecyl sulfate

Suitable alkyl sulfosuccinate surfactants and alkyl ether sulfosuccinate surfactants include, for example, disodium laureth sulfosuccinate.

Suitable monoalkyl phosphate surfactants, monoalkyl ether phosphate surfactants, dialkyl phosphate surfactants, dialkyl ether phosphate surfactants include, for example, sodium monoalkyl phosphate, sodium dialkyl phosphate, alkoxylated tristyrylphenol phosphates.

Suitable alkyl ether carboxylate surfactants include for example, sodium laureth carboxylate.

Suitable glutamate surfactants, isethionate surfactants, taurate surfactants, and sarcosinate surfactants include, for example, sodium lauroyl isethionate, potassium methyl myristyl taurate, ammonium oleoyl sarcosinate.

In one embodiment, the adjuvant composition comprises one or more anionic surfactants selected from ethoxylated partial phosphate esters, alkyl sulfates, alkenyl sulfonates, and alkyaryl sulfonates.

Polyanionic polymers include polycarboxylate salts, and sulfonated aromatic condensate polymers. Suitable sulfonated aromatic condensate polymers comprise condensates of aromatic sulfonic acids such as, for example, naphthalene sulfonic acids, naphthol sulfonic acids, alkylated naphthalene and alkylated naphthol sulfonic acids toluene sulfonic acids, benzene sulfonic acids, phenol sulfonic acids, with formaldehyde.

In one embodiment, the adjuvant composition comprises one or more anionic surfactants selected from aryl sulfonate salts, aliphatic glutamate surfactants, more typically, (C₁₂-C₂₂)aliphatic glutamate salts, aliphatic isethionate surfactants, more typically, (C₁₂-C₂₂)aliphatic isethionate salts, aliphatic taurate surfactants, more typically, (C₁₂-C₂₂)aliphatic taurate salts, aliphatic sarcosinate surfactants, more typically, (C₁₂-C₂₂) sarcosinate salts.

In one embodiment, the adjuvant composition of the present invention comprises, based on 100 pbw of the adjuvant composition, from greater than 0 pbw, more typically from about 0.1 pbw, and even more typically from about 0.2 pbw, to about 2 pbw, more typically about 1.5 pbw, and even more typically about 1 pbw, of the one or more anionic surfactants (b)(ii).

In one embodiment of the adjuvant composition of the present invention, the combined surfactant components (a) and (b)(i) and/or (b)(ii) of the adjuvant composition are effective in stabilizing an emulsion of the oil component of the adjuvant composition in water.

In one embodiment of the adjuvant composition of the present invention, the combined surfactant components (a) and (b)(i) and/or (b)(ii) provide excellent dispersant properties to the adjuvant composition, that is, on contacting the adjuvant composition with a volume of water, the combined surfactant components (a) and (b)(i) and/or (b)(ii) reduce oil/water surface tension to a very low level and thereby drive rapid dispersion of the oil component of the adjuvant composition in the volume of water.

In one embodiment, if the one or more first nonionic surfactants (a) and one or more second nonionic surfactants (b)(i) comprise a polyalkoxylated castor oil surfactant, a polyalkoxylated alkyl phenol surfactant, a sorbitan fatty acid ester surfactant, a polyalkoxylated sorbitan fatty acid ester surfactant, or a mixture thereof, then the composition cannot further comprise an anionic surfactant (b)(ii) that is selected from alkaryl sulfonate surfactant, an alpha olefin sulfonate surfactant, an alkyl sulfate surfactant, alkyl ether sulfate surfactant, a monoalkyl phosphate surfactant, a monoalkyl ether phosphate surfactant, a dialkyl phosphate surfactant, a dialkyl ether phosphate surfactant, or a mixture thereof.

In one embodiment, the adjuvant composition of the present invention comprises, based on 100 pbw of the adjuvant composition, greater than or equal to 5 pbw, more typically greater than or equal to 7.5 pbw and even more typically greater than or equal to 10 pbw, of a combined amount of surfactants (a) and surfactants (b)(i) and (b)(ii).

The composition of the present invention may optionally further comprise other surfactants, which may be one or more anionic, cationic, nonionic, amphoteric, or zwitterionic surfactant, in addition to the above described surfactants (a), (b)(i), and (b)(ii). In one embodiment, the amount of such additional surfactants is limited and the surfactant component of the adjuvant composition of the present invention comprises (a) one or more first nonionic surfactants, (b)(i) one or more second nonionic surfactants, and, optionally (b)(ii) one or more anionic surfactants, and further comprises (b)(iii) one or more anionic, cationic, nonionic, amphoteric, or zwitterionic surfactant other than surfactants (a), (b)(i), and (b)(ii), typically in an amount, based on 100 pbw of the combined surfactants (a), (b)(i), (b)(ii), and (b)(iii), of from 0 to about 10 pbw, more typically from 0 to about 5 pbw, and even more typically, from 0 to less than about 1 pbw of such surfactant (b)(iii).

In one embodiment, the adjuvant composition of the present invention contains no surfactant other than (a) the one or more first nonionic surfactants, and (b)(i) one or more second nonionic surfactants and/or (b)(ii) one or more anionic surfactants. In one embodiment, the adjuvant composition of the present invention contains no surfactant other than (a) the one or more first nonionic surfactants and (b)(i) the one or more second nonionic surfactants. In another embodiment, the adjuvant composition of the present invention contains no surfactant other than (a) the one or more first nonionic surfactants, and (b)(ii) the one or more anionic surfactants.

one or more fatty acid (C₁-C₃)alkyl esters. In one embodiment, the fatty acid (C₁-C₃)alkyl ester component of the adjuvant composition of the present invention comprises one or more compounds according to structure (I): 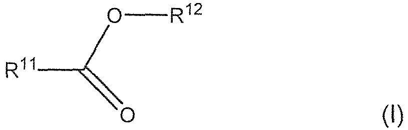 wherein:
R¹¹ is (C₆-C₂₄)alkyl or (C₆-C₂₄)alkenyl, and
R¹² is (C₁-C₃)alkyl, more typically, methyl.

In one embodiment, the fatty acid (C₁-C₃)alkyl ester comprises one or more compounds according to structure (I) wherein R¹¹ is (C₆-C₂₄)alkyl, such as, for example, hexyl, heptyl, octyl, nonyl, decyl, undecyl, dodecyl, tridecyl, tetradecyl, pentadecyl, hexadecyl, heptadecyl, octadecyl, nonadecyl, eicosyl, docosyl, tricosyl, tetracosyl.

In one embodiment, the fatty acid (C₁-C₃)alkyl ester comprises one or more compounds according to structure (I) wherein R¹¹ is mono-unsaturated or poly-unsaturated (C₆-C₂₄)alkenyl, such as, for example, *cis*- 9-hexadecenyl *all cis*-7,10,13-hexadecatrienyl, *cis*-6-octadecenyl, trans-6-octadecenyl , *cis-*7-octadecenyl, *cis*-9-octadecenyl, *trans*-9-octadecenyl, *cis*-11-octadecenyl *trans-*11-octadecenyl, *cis*-12-octadecenyl, cis, *cis*-9,12-octadecedienyl, *trans-*9,12-octadecedienyl, all cis-6,9,12-octadecatrienyl, *all cis*-9,12,15-octadecatrienyl, *all cis*-6,9,12,15,-octadecatetraenyl, cis-11-eicosenyl, *cis*, *cis*-11,14-eicosadienyl, *all cis-11,*14,17-eicosatrienyl *all cis*-5,8,11,14-eicosatetraenyl, *all* cis-8,11,14,17-eicosatetraenyl, *all cis*-5,8,1 1 ,14,17-eicosapentaenyl, *cis*-13-docosenyl, *cis, cis-*13,16-docosadienyl, *all cis*-6,9,12-octadecatrienyl, *all cis*-7,10,13,16-docosatetraenyl, *all cis*-7,10,13,16,19-docosapentaenyl, *all cis*-4,7,10,13,16,19-docosahexaenyl, *cis*-15-tetracosenyl, *all cis*-9,12,15,18,21-tetracosapentaenyl, or *all cis*-6,9,12,15,18,21-tetracosahexaenyl.

In one embodiment, the fatty acid (C₁-C₃)alkyl ester comprises one or more compounds according to structure (I) wherein R¹¹ is (C₆-C₂₄)alkyl and one or more compounds according to structure (I) wherein R¹¹ is mono-unsaturated or poly-unsaturated (C₆-C₂₄)alkenyl.

In one embodiment, the fatty acid (C₁-C₃)alkyl ester comprises one or more compounds according to structure (I) wherein R¹¹ is (C₆-C₂₄)alkyl and one or more compounds according to structure (I) wherein R¹¹ is mono-unsaturated or poly-unsaturated (C₆-C₂₄)alkenyl, and R¹² is methyl.

In one embodiment, the fatty acid (C₁-C₃)alkyl ester comprises one or more compounds according to structure (I) wherein R¹¹ is (C₆-C₁₂)alkyl or (C₆-C₁₂)alkenyl. In another embodiment, the fatty acid (C₁-C₃)alkyl ester comprises one or more compounds according to structure (I) wherein R¹¹ is (C₁₃-C₂₄)alkyl or (C₁₃-C₂₄)alkenyl.

In one embodiment, the fatty acid (C₁-C₃)alkyl ester comprises one or more compounds according to structure (I) wherein R¹¹ is (C₆-C₁₂)alkyl or (C₆-C₁₂)alkenyl, and R¹² is methyl. In another embodiment, the fatty acid (C₁-C₃)alkyl ester comprises one or more compounds according to structure (I) wherein R¹¹ is (C₁₃-C₂₄)alkyl or (C₁₃-C₂₄)alkenyl, and R¹² is methyl.

Suitable fatty acid (C₁-C₃)alkyl esters may be made by, for example, acid-catalyzed esterification of corresponding fatty acids or corresponding fatty mono-, di- and/or tri-glycerides with a (C₁-C₃) alcohol, more typically methanol, or by transesterification of the corresponding fatty mono-, di- and/or tri-glycerides with a (C₁-C₃) alcohol, more typically methanol. Convenient sources of fatty acids and fatty acid glycerides include the vegetable oils and animals fats described above. Suitable fatty acid methyl esters are commercially available. One commercial source of fatty acid (C₁-C₃)alkyl esters is "bio-diesel" fuels made by transesterification of vegetable oils or animal fats with a (C₁-C₃) alcohol, more typically methanol.

In one embodiment, the fatty acid (C₁-C₃)alkyl ester component of the composition of the present invention comprises one or more of methyl, ethyl, or propyl hexanoate, methyl, ethyl, or propyl heptanoate, methyl, ethyl, or propyl octanoate, methyl, ethyl, or propyl nonanoate, methyl, ethyl, or propyl decanoate, methyl, ethyl, or propyl undecanoate, methyl, ethyl, or propyl dodecanoate, methyl, ethyl, or propyl tridecanoate, methyl, ethyl, or propyl tetradecanoate, methyl, ethyl, or propyl pentadecanoate, methyl, ethyl, or propyl hexadecanoate, methyl, ethyl, or propyl heptadecanoate, methyl, ethyl, or propyl octadecanoate, methyl, ethyl, or propyl nonadecanoate, methyl, ethyl, or propyl eicosanoate, methyl, ethyl, or propyl docosanoate, methyl, ethyl, or propyl tricosanoate, methyl, ethyl, or propyl tetracosanoate, methyl, ethyl, or propyl *cis-*9-hexadecenoate, methyl, ethyl, or propyl *all cis*-7,10,13-hexadecatrienoate methyl, ethyl, or propyl *cis*-6-octadecenoate, methyl, ethyl, or propyl *trans-*6-octadecenoate, methyl, ethyl, or propyl *cis*-7-octadecenoate, methyl, ethyl, or propyl *cis*-9-octadecenoate, methyl, ethyl, or propyl *trans*-9-octadecenoate, methyl, ethyl, or propyl *cis*-11-octadecenoate, methyl, ethyl, or propyl *trans*-11-octadecenoate, methyl, ethyl, or propyl *cis*-12-octadecenoate, methyl, ethyl, or propyl *cis, cis*-9,12-octadecedienoate, methyl, ethyl, or propyl *trans-*9,12-octadecedienoate, methyl, ethyl, or propyl all cis-6,9,12-octadecatrienoate, methyl, ethyl, or propyl ester *all cis-*9,12,15-octadecatrienoate*,* methyl, ethyl, or propyl *all cis*-6,9,12,15,-octadecatetraenoate, methyl, ethyl, or propyl cis-11-eicosenoate, methyl, ethyl, or propyl *cis, cis*-11,14-eicosadienoate, methyl, ethyl, or propyl *all cis*-11,14,17-eicosatrienoate*,* methyl, ethyl, or propyl *all cis-*5,8,11,14-eicosatetraenoate, methyl, ethyl, or propyl all cis-8,11,14,17-eicosatetraenoate, methyl, ethyl, or propyl *all cis*-5,8,11,14,17-eicosapentaenoate, methyl, ethyl, or propyl *cis*-13-docosenoate, methyl, ethyl, or propyl *cis, cis*-13,16-docosadienoate, methyl, ethyl, or propyl *all cis-*6,9,12-octadecatrienoate, methyl, ethyl, or propyl *all cis*-7,10,13,16-docosatetraenoate, methyl, ethyl, or propyl *all cis*-7,10,13,16,19-docosapentaenoate, methyl, ethyl, or propyl all cis-4,7,10,13,16,19-docosahexaenoate, methyl, ethyl, or propyl *cis-*15-tetracosenoate methyl, ethyl, or propyl *all cis*-9,12,15,18,21-tetracosapentaenoate, methyl, ethyl, or propyl *all cis*-6,9,12,15,18,21-tetracosahexaenoate, including mixtures two or more of any of such fatty acid (C₁-C₃)alkyl esters. More typically, the fatty acid (C₁-C₃)alkyl ester component of the composition of the present invention comprises a mixture of two or more of such fatty acid (C₁-C₃)alkyl esters, in the form of one or more (C₁-C₃)alkyl esters of one or more vegetable oils, more typically, a methylated vegetable oil, even more typically, methylated soybean oil or methylated rapeseed oil.

The liquid medium may further comprise one or more organic liquids and may further comprise a minor amount, typically less than 20 pbw per pbw of the composition, of water. Suitable organic liquids include polar organic liquids, such as hexanes, cyclohexane, benzene, toluene, chloroform, diethyl ether, polar aprotic organic liquids, such as dichloromethane, ethyl acetate, acetone, tetrahydrofuran, and polar protic organic liquids, such as methanol, ethanol, propanol, glycerol, ethylene glycol, propylene glycol, diethylene glycol, poly(ethylene glycol)s, ethylene glycol monobutyl ether, dipropylene glycol methyl ether, and ethylene glycol phenyl ether, as well as mixtures of such organic liquids.

The adjuvant composition of the present invention comprises, based on 100 pbw of the adjuvant composition, from about 50 pbw, more typically from about 55 pbw, and even more typically from about 60 pbw, to about 85 pbw, and even more typically about 75 pbw, of the liquid medium.

Water soluble polymers useful as deposition aids include water soluble polysaccharide polymers and water soluble non-polysaccharide polymers.

Suitable water soluble polysaccharide polymers are include, for example, galactomannans such as guars, including guar derivatives, xanthans, polyfructoses such as levan, starches, including starch derivatives, such as amylopectin, and cellulose, including cellulose derivatives, such as methylcellulose, ethylcellulose, carboxymethylcellulose, hydroxyethylcellulose, cellulose acetate, cellulose acetate butyrate, and cellulose acetate propionate.

Galactomannans are polysaccharides consisting mainly of the monosaccharides mannose and galactose. The mannose-elements form a chain consisting of many hundreds of (1,4)-β-D-mannopyranosyl-residues, with 1,6 linked □-D-galactopyranosyl-residues at varying distances, dependent on the plant of origin. Naturally occurring galactomannans are available from numerous sources, including guar gum, guar splits, locust bean gum, cassia gum, fenugreek gum, and tara gum. Additionally, galactomannans may also be obtained by classical synthetic routes or may be obtained by chemical modification of naturally occurring galactomannans.

Guar gum refers to the mucilage found in the seed of the leguminous plant *Cyamopsis tetragonolobus.* The water soluble fraction (85%) is called "guaran," which consists of linear chains of (1,4)-β-D mannopyranosyl units-with α-D-galactopyranosyl units attached by (1,6) linkages. The ratio of D-galactose to D-mannose in guaran is about 1:2. Guar gum typically has a weight average molecular weight of between 2,000,000 and 5,000,000 g/mol. Guars having a reduced molecular weight, such as for example, from about 50,000 to about 2,000,000 g/mol are also known.

Guar seeds are composed of a pair of tough, non-brittle endosperm sections, hereafter referred to as "guar splits," between which is sandwiched the brittle embryo (germ). After dehulling, the seeds are split, the germ (43-47% of the seed) is removed by screening, and the splits are ground. The ground splits are reported to contain about 78-82% galactomannan polysaccharide and minor amounts of some proteinaceous material, inorganic salts, water-insoluble gum, and cell membranes, as well as some residual seedcoat and embryo.

Locust bean gum or carob bean gum is the refined endosperm of the seed of the carob tree, *Ceratonia siliqua.* The ratio of galactose to mannose for this type of gum is about 1:4. Locust bean gum is commercially available. Cassia gum is the refined endosperm of *Senna obtusifolia* and has a ration of galactose to mannose of about 1:5. Tara gum is derived from the refined seed gum of the tara tree. The ratio of galactose to mannose is about 1:3. Tara gum is commercially available.

Other galactomannans of interest are the modified galactomannans, including derivatized guar polymers, such as carboxymethyl guar, carboxymethylhydroxypropyl guar, cationic hydroxpropyl guar, hydroxyalkyl guar, including hydroxyethyl guar, hydroxypropyl guar, hydroxybutyl guar and higher hydroxylalkyl guars, carboxylalkyl guars, including carboxymethyl guar, carboxylpropyl guar, carboxybutyl guar, and higher carboxyalkyl guars, the hydroxyethylated, hydroxypropylated and carboxymethylated derivative of guaran, the hydroxethylated and carboxymethylated derivatives of carubin, and the hydroxypropylated and carboxymethylated derivatives of cassia-gum.

Xanthans of interest are xanthan gum and xanthan gel. Xanthan gum is a polysaccharide gum produced by *Xathomonas campestris* and contains D-glucose, D-mannose, D-glucuronic acid as the main hexose units, also contains pyruvate acid, and is partially acetylated.

Levan is a polyfructose comprising 5-membered rings linked through β-2,6 bonds, with branching through β-2,1 bonds. Levan exhibits a glass transition temperature of 138°C and is available in particulate form. At a molecular weight of 1-2 million, the diameter of the densely-packed spherulitic particles is about 85 nm.

Modified celluloses are celluloses containing at least one functional group, such as a hydroxy group, hydroxycarboxyl group, or hydroxyalkyl group, such as for example, hydroxymethyl cellulose, hydroxyethyl celluloses, hydroxypropyl celluloses or hydroxybutyl celluloses.

Processes for making derivatives of polysaccharide polymers are generally known. Typically, the polysaccharide polymer is reacted, via the hydroxyl substituents of the polysaccharide polymer, with one or more derivatizing agents under appropriate reaction conditions to produce a derivatized polysaccharide polymer having the desired substituent groups. Suitable derivatizing reagents are commercially available and typically contain a reactive functional group, such as an epoxy group, a chlorohydrin group, or an ethylenically unsaturated group, and at least one other substituent group, such as a cationic, nonionic or anionic substituent group, or a precursor of such a substituent group per molecule, wherein substituent group may be linked to the reactive functional group of the derivatizing agent by bivalent linking group, such as an alkylene or oxyalkylene group. Suitable cationic substituent groups include primary, secondary, or tertiary amino groups or quaternary ammonium, sulfonium, or phosphinium groups. Suitable nonionic substituent groups include hydroxyalkyl groups, such as hydroxypropyl groups. Suitable anionic groups include carboxyalkyl groups, such as carboxymethyl groups. The cationic, nonionic and/ or anionic substituent groups may be introduced to the polysaccharide polymer via a series of reactions or by simultaneous reactions with the respective appropriate derivatizing agents.

The polysaccharide may be treated with a crosslinking agent, such for example, borax (sodium tetra borate) is commonly used as a processing aid in the reaction step of the water-guar splits process to partially crosslink the surface of the guar splits and thereby reduces the amount of water absorbed by the guar splits during processing. Other crosslinkers, such as, for example, glyoxal or titanate compounds, are known.

The adjuvant composition of the present invention comprises one or more water soluble deposition aid polymers selected from guars and guar derivatives. In one embodiment, the one or more water soluble deposition aid polymers is a non-derivatized guar gum.

In one embodiment, the one or more water soluble deposition aid polymers of the present invention is a derivatized guar that is substituted at one or more sites of guar with a substituent group that is independently selected for each site from the group consisting of cationic substituent groups, nonionic substituent groups, and anionic substituent groups.

In one embodiment, the one or more water soluble deposition aid polymers of the present invention is a derivatized guar. Suitable derivatized guars include, for example, hydroxypropyl trimethylammonium guar, hydroxypropyl lauryldimethylammonium guar, hydroxypropyl stearyldimethylammonium guar, hydroxypropyl guar, carboxymethyl guar, guar with hydroxypropyl groups and hydroxypropyl trimethylammonium groups, guar with carboxymethyl hydroxypropyl groups and mixtures thereof.

The amount of derivatizing groups in a derivatized polysaccharide polymer may be characterized by the degree of substitution of the derivatized polysaccharide polymer or the molar substitution of the derivatized polysaccharide polymer.

As used herein, the terminology "degree of substitution" in reference to a given type of derivatizing group and a given polysaccharide polymer means the number of the average number of such derivatizing groups attached to each monomeric unit of the polysaccharide polymer. In one embodiment, the derivatized polysaccharide exhibits a total degree of substitution ("DS_{T}") of from about 0.001 to about 3.0, wherein:
DS_{T} is the sum of the DS for cationic substituent groups ("DS_{cationic}"), the DS for nonionic substituent groups ("DS_{nonionic}") and the DS for anionic substituent groups ("DSanionic"),
DScationic is from 0 to about 3, more typically from about 0.001 to about 2.0, and even more typically from about 0.001 to about 1.0,
DSnonionic is from 0 to 3.0, more typically from about 0.001 to about 2.5, and even more typically from about 0.001 to about 1.0, and
DS_{anionic} is from 0 to 3.0, more typically from about 0.001 to about 2.0.

As used herein, the term "molar substitution" or "ms" refers to the number of moles of derivatizing groups per moles of monosaccharide units of the guar. The molar substitution can be determined by the Zeisel-GC method. The molar substitution of polysaccharide polymers useful as the water soluble polymer component of the present invention is typically in the range of from about 0.001 to about 3.

Water soluble non-polysaccharide polymers include, for example, lecithin polymers, poly(alkyleneoxide) polymers, such as poly(ethylene oxide) polymers, and water soluble polymers derived from ethylenically unsaturated monomers. Water soluble polymers derived from ethylenically unsaturated monomers include water soluble polymers derived from (meth)acrylic acid, (meth)acrylamide, 2-hydroxy ethyl acrylate, and/or N-vinyl pyrrolidone, including homopolymers of such monomers, such as poly(acrylic acid) polymers, poly(acrylamide) polymers and poly(vinyl pyrrolidone) polymers, as well as copolymers of such monomers with one or more comonomers. Water soluble copolymers derived from ethylenically unsaturated monomers include water soluble cationic polymers made by polymerization of at least one cationic monomer, such as a diamino alkyl (meth)acrylate or diaminoalkyl (meth)acrylamide, or mixture thereof and one or more nonionic monomers, such as acrylamide or methacrylamide. The non-polysaccharide polymer may exhibit a weight average molecular weight of greater than about 1,000 g/mol, more typically greater than about 10,000 g/mol to about 20,000,000 g/mol, more typically to about 10,000,000 g/mol.

In one embodiment, the water soluble polymer is in the form of particles. In one embodiment, the particles of polysaccharide polymer have an initial, that is, determined for dry particles prior to suspension in the aqueous medium, average particle size of about 5 to 200 micrometers (µm), more typically about 20 to 200 µm, as measured by light scattering, and exhibit a particle size in the aqueous medium of greater than or equal to the initial particle size, that is greater than or equal to 5 µm, more typically greater or equal to than 20 µm, with any increase from the initial particle size being due to swelling brought about by partial hydration of the polysaccharide polymer in the aqueous medium.

The adjuvant composition of the present invention comprises, based on 100 pbw of the adjuvant composition, from about 1 pbw, more typically from about 1.5 pbw, and even more typically from about 2 pbw, to about 20 pbw, more typically about 15 pbw, and even more typically about 18 pbw, of the one or more water soluble deposition aid polymers.

The composition of the present invention further comprises a thickening agent, typically dispersed in the liquid medium, in an amount effective to improve the room temperature stability of the composition, typically by imparting shear thinning viscosity, to impart yield strength, or to impart shear thinning viscosity and yield strength to the composition, in an amount, based on 100 pbw of the composition of the present invention, of from greater than 0 to about 10 pbw, more typically from about 0.2 to about 5 pbw, and even more typically, from about 0.5 to about 5 pbw of the thickening agent.

In the present invention, the thickening agent comprises one or more thickening agent selected from silica, more typically fumed silica, inorganic colloidal or colloid-forming clay particles.

In one embodiment, the thickening agent component of the composition of the present invention comprises a fumed silica. Fumed silica is typically produced by the vapor phase hydrolysis of a silicon compound, e.g., silicon tetrachloride, in a hydrogen oxygen flame. The combustion process creates silicon dioxide molecules that condense to form particles. The particles collide, attach, and sinter together. The result of these processes is typically a three dimensional branched chain aggregate, typically having an average particles size of from about 0.2 to 0.3 micron. Once the aggregates cool below the fusion point of silica (1710°C), further collisions result in mechanical entanglement of the chains, termed agglomeration.

In one embodiment, suitable fumed silica has a BET surface area of from 50-400 square meters per gram (m²/g), more typically from, from about 100 m²/g to about 400 m²/g.

In one embodiment, the thickening agent component of the composition of the present invention comprises a fumed silica in an amount that is effective, either alone or in combination with one or more other thickening agents, to impart shear thinning viscosity to the composition, typically in an amount, based on 100 pbw of the composition, of from greater than 0 pbw, more typically from about 0.1 pbw, and even more typically from about 0.5 pbw, to about 10 pbw, more typically to about 5 pbw, and even more typically to about 2.5 pbw, of fumed silica.

In one embodiment, the composition of the present invention comprises, based on 100 pbw of the composition, from greater than 0 to about 10 pbw, more typically from about 0.1 to about 5 pbw, and even more typically from about 0.5 to about 2.5 pbw, of fumed silica.

In one embodiment, the thickening agent component of the composition of the present invention comprises an inorganic, typically aluminosilicate or magnesium silicate, colloid-forming clay, typically, a smectite (also known as montmorillonoid) clay, an attapulgite (also known as palygorskite) clay, or a mixture thereof. These clay materials can be described as expandable layered clays, wherein the term "expandable" as used herein in reference to such clay relates to the ability of the layered clay structure to be swollen, or expanded, on contact with water.

Smectites are three-layered clays. There are two distinct classes of smectite-type clays. In the first class of smectites, aluminum oxide is present in the silicate crystal lattice and the clays have a typical formula of Al₂(Si₂O₅)₂(OH)₂. In the second class of smectites, magnesium oxide is present in the silicate crystal lattice and the clays have a typical formula of Mg₃(Si₂O₅)(OH)₂. The range of the water of hydration in the above formulas can vary with the processing to which the clay has been subjected. This is immaterial to the use of the smectite clays in the present compositions in that the expandable characteristics of the hydrated clays are dictated by the silicate lattice structure. Furthermore, atomic substitution by iron and magnesium can occur within the crystal lattice of the smectites, while metal cations such as Na⁺, Ca⁺², as well as H⁺, can be present in the water of hydration to provide electrical neutrality. Although the presence of iron in such clay material is preferably avoided to minimize chemical interaction between clay and optional composition components, such cation substitutions in general are immaterial to the use of the clays herein since the desirable physical properties of the clay are not substantially altered thereby.

The layered expandable aluminosilicate smectite clays useful herein are further characterized by a dioctahedral crystal lattice, whereas the expandable magnesium silicate smectite clays have a trioctahedral crystal lattice.

Suitable smectite clays, include, for example, montmorillonite (bentonite), volchonskoite, nontronite, beidellite, hectorite, saponite, sauconite and vermiculite, are commercially available.

Attapulgites are magnesium-rich clays having principles of superposition of tetrahedral and octahedral unit cell elements different from the smectites. An idealized composition of the attapulgite unit cell is given as: (H₂O)₄(OH)₂Mg₅Si₈O₂0₄H₂O. Attapulgite clays are commercially available.

As noted above, the clays employed in the compositions of the present invention contain cationic counter ions such as protons, sodium ions, potassium ions, calcium ions, magnesium ions and the like. It is customary to distinguish between clays on the basis of one cation which is predominately or exclusively absorbed. For example, a sodium clay is one in which the absorbed cation is predominately sodium. Such absorbed cations can become involved in exchange reactions with cations present in aqueous solutions.

Commercially obtained clay materials can comprise mixtures of the various discrete mineral entities. Such mixtures of the minerals are suitable for use in the present compositions. In addition, natural clays sometimes consist of particles in which unit layers of different types of clay minerals are stacked together (interstratification). Such clays are called mixed layer clays, and these materials are also suitable for use herein.

In one embodiment, thickening agent component of the composition of the present invention comprises an inorganic colloid forming clay in an amount that is effective, either alone or in combination with one or more other thickening agents, to impart shear thinning viscosity to the composition, typically in an amount, based on 100 pbw of the composition, of from greater than 0 pbw, more typically from about 0.1 pbw, and even more typically from about 0.5 pbw, to about 10 pbw, more typically to about 5 pbw, and even more typically to about 2.5 pbw, of inorganic colloid forming clay.

In one embodiment, the composition of the present invention comprises, based on 100 pbw of the composition, from greater than 0 to about 10 pbw, more typically from about 0.1 to about 5 pbw, and even more typically from about 0.5 to about 2.5 pbw, of inorganic colloid forming clay. In one embodiment, the composition further comprises a polar activator, such as propylene glycol, for the clay thickener.

A fumed silica or clay thickening agent is typically introduced to the liquid medium and mixed to disperse the fumed silica or clay thickening agent in the liquid medium.

Synthetic polymeric thickeners include styrene isoprene copolymers, styrene ethylene-propylene block copolymers, styrene isobutylene copolymers, styrene butadiene copolymers, polybutylene, polystyrene, polyethylene-propylene copolymers, methyl methacrylate, more typically one or more block copolymeric thickeners, such as styrene ethylene-propylene block copolymers, hydrogenated styrene-isoprene block copolymers, and styrene butadiene copolymers. even more typically, one or more hydrogenated styrene-isoprene block copolymeric thickeners.

The adjuvant composition of the present invention comprises, based on 100 pbw of the adjuvant composition greater than 0 pbw, more typically from about 0.2 pbw, and even more typically from about 0.4 pbw, to about 10 pbw, more typically about 8 pbw, and even more typically about 6 pbw, of the one or more thickening agents.

Also disclosed, the adjuvant composition comprises:
(a) one or more first nonionic surfactants selected from the group consisting of polyalkoxylated triglyceride surfactants, sorbitan fatty acid ester surfactants, and alkoxylated sorbitan fatty acid ester surfactants,
(b)(ii) one or more anionic surfactants selected from alkaryl sulfonates,
(c) a liquid medium comprising one or more fatty acid (C₁-C₃)alkyl esters, and
(d) one or more water soluble deposition aid polymers, and
(e) one or more thickening agents.

Also disclosed, the adjuvant composition comprises:
(a) one or more first nonionic surfactants selected from the group consisting of fatty acid glycol ester surfactants and alkoxylated fatty alcohol surfactants,
(b)(i) one or more second nonionic surfactants selected alkoxylated alkylaryl phenol surfactants,
(b)(ii) one or more anionic surfactants selected from aliphatic glutamate surfactants, aliphatic isethionate surfactants, aliphatic taurate surfactants , and aliphatic sarcosinate surfactants,
(c) a liquid medium comprising one or more fatty acid (C₁-C₃)alkyl esters, and
(d) one or more water soluble deposition aid polymers, and
(e) one or more thickening agents.

Also disclosed, the adjuvant composition comprises, based on 100 pbw of the adjuvant composition:
from about 5 pbw, more typically from about 8 pbw, and even more typically from about 10 pbw, to about 30 pbw, more typically about 25 pbw, and even more typically about 20 pbw, of a combined amount of the one or more of the first nonionic surfactants (a), and the one or more second nonionic surfactants (b)(i), wherein the combined amount of the one or more of the first nonionic surfactants (a) and one or more second nonionic surfactants (b)(i) comprises, based on 100 pbw of such combined amount:
(a) from about 65 pbw, more typically from about 75 pbw, and even more typically from about 85 pbw, to about 100 pbw, more typically about 98 pbw, and even more typically about 95 pbw, of the one or more first nonionic surfactants, and
(b)(i) from 0 pbw, more typically from about 2 pbw, and even more typically from about 5 pbw, to about 35 pbw, more typically about 25 pbw, and even more typically about 15 pbw, of the one or more second nonionic surfactants,
(b)(ii) from 0 pbw, more typically from about 0,1 pbw, and even more typically from about 0.2 pbw, to about 2 pbw, more typically about 1.5 pbw, and even more typically about 1 pbw, of the one or more anionic surfactants,
(c) from about 50 pbw, more typically from about 55 pbw, and even more typically from about 60 pbw, to about 95 pbw, more typically about 85 pbw, and even more typically about 75 pbw, of the liquid medium comprising one or more fatty acid (C₁-C₃)alkyl esters,
(d) from about 1 pbw, more typically from about 1.5 pbw, and even more typically from about 2 pbw, to about 20 pbw, more typically about 15 pbw, and even more typically about 18 pbw, of the one or more water soluble deposition aid polymers, and
(e) from 0 pbw, more typically from about 0.2 pbw, and even more typically from about 0.4 pbw, to about 10 pbw, more typically about 8 pbw, and even more typically about 6 pbw, of the one or more thickening agents.

Also disclosed, the adjuvant composition comprises
(a) one or more first nonionic surfactants selected from the group consisting of polyalkoxylated triglyceride surfactants, more typically of alkyl esters of polyalkoxylated triglyceride surfactants,
(b)(ii) one or more anionic surfactants, more typically one or more anionic surfactants selected from aliphatic glutamate surfactants, aliphatic isethionate surfactants, aliphatic taurate surfactants, and aliphatic sarcosinate surfactants.
(c) a liquid medium comprising one or more fatty acid (C₁-C₃)alkyl esters,
(d) one or more water soluble deposition aid polymers, and
(e) one or more thickening agents.

Also disclosed, the adjuvant comprises, based on 100 pbw of the alternative adjuvant composition:
(a) from about 5 pbw, more typically from about 10 pbw, and even more typically from about 15 pbw, to about 35 pbw, more typically about 30 pbw, and even more typically about 25 pbw, of the one or more first nonionic surfactants,
(b(ii) from greater than 0 pbw, more typically from about 0,1 pbw, and even more typically from about 0.2 pbw, to about 2 pbw, more typically about 1.5 pbw, and even more typically about 1 pbw, of the one or more anionic surfactants,
(c) from about 50 pbw, more typically from about 55 pbw, and even more typically from about 60 pbw, to about 95 pbw, more typically about 85 pbw, and even more typically about 75 pbw, of the liquid medium comprising one or more fatty acid (C₁-C₃)alkyl esters,
(d) from about 1 pbw, more typically from about 1.5 pbw, and even more typically from about 2 pbw, to about 20 pbw, more typically about 15 pbw, and even more typically about 18 pbw, of the one or more water soluble deposition aid polymers, and
(e) from greater than 0 pbw, more typically from about 0.2 pbw, and even more typically from about 0.4 pbw, to about 10 pbw, more typically about 8 pbw, and even more typically about 6 pbw, of the one or more thickening agents.

Also disclosed is a method for making an adjuvant composition, comprising the steps of:
(1) dispersing one or more thickening agents (e), typically selected from inorganic colloidal or colloid-forming clay particles, in a liquid medium (c) to form a thickened liquid medium,
(2) dispersing one or more first nonionic surfactants (a), and at least one of one or more second nonionic surfactants (b)(i) or one or more anionic surfactants (b)(ii), in the thickened liquid medium,
(3) optionally, dispersing one or more additional thickening agents (e), typically selected from fumed silica thickening agents, in the thickened liquid medium, and
(4) dispersing the one or more water soluble deposition aid polymers (d) in the thickened liquid medium.

In one embodiment, step (1) comprises dispersing, under high shear mixing conditions, one or more thickening agents selected from inorganic colloidal or colloid-forming clay particles and, optionally, one or more polar activators for the one or more thickening agents. The stability of the composition of the present invention can be influenced by the degree of shear and activation of clay thickeners. The clay platelets are first wetted out under influence of high shear which leads to the deagglomeration of the platelets followed by addition of a polar activator for the clay, to force the clay platelets further apart. Continued application of high shear results in a fully active rheological structure.

The order of addition of the ingredients of the composition of the present invention can influence the stability of the composition. In one embodiment, a clay thickener and polar activator for the clay thickener are added to the liquid medium and subjected to high shear before any surfactants are added to the composition. It is believed that a surfactant may encapsulate unactivated clay platelet stacks and inhibit activation of the clay by the polar additive and that this can compromise dispersion of the clay and strength of the clay gel structure.

Provided that step (1) is conducted prior to step (2), the steps (1), (2), (3), (4) can be conducted in any order. In one embodiment, the steps are conducted in the order (1), (2), (3), (4), or (1), (3), (2), (4), or (1), (3), (4), (2), most typically, in the order (1), (2), (3), (4).

In one embodiment, the ingredients of the composition of the present invention are added in the following order, liquid medium, clay thickener, polar activator for the clay thickener, emulsifers and surfactants, fillers, secondary thickeners, and water soluble dispersion aid polymer.

In one embodiment, the composition of the present invention exhibits a non-Newtonian "shear thinning" viscosity, that is, a viscosity that, within a given range of shear stress, decreases with increasing shear stress. Two general generally recognized categories of flow behavior, that is, plastic flow behavior and pseudoplastic flow behavior, each include shear thinning flow behavior.

In one embodiment, the composition of the present invention exhibits plastic flow behavior. As used herein, the term "plastic" in reference to flow behavior of a composition means the composition that exhibits a characteristic "yield strength", that is, a minimum shear stress required to initiate flow of the composition, and exhibits shear thinning behavior over some range of shear stress above the yield strength. A plastic composition exhibits no flow when subjected to shear stress below its yield strength, and flows when subjected to shear stress above its yield strength, wherein, over an intermediate range of shear stress above its yield strength, the composition typically exhibits a non-Newtonian viscosity that decreases with increasing shear stress, that is, shear thinning behavior, and, at shear stresses above the intermediate range of shear stress, the composition may exhibit a viscosity that does not vary with shear stress, that is, Newtonian flow behavior.

In one embodiment the composition of the present invention exhibits pseudoplastic flow behavior. As used herein, the term "pseudoplastic" in reference to the flow behavior of a composition means that the composition exhibits a viscosity that decreases with increasing shear stress, that is, shear thinning behavior.

In each case, a composition having plastic or pseudoplastic rheological properties resists flow at low shear stress, but that when subjected to an elevated shear stress, such as being shaken in a bottle or squeezed through an orifice, the composition flows and can be easily pumped, poured, or otherwise dispensed from a container. In general, sedimentation or storage condition is a low shear process, having a shear rate in the range of from about 10⁻⁶ reciprocal seconds (1/s or, equivalently, s⁻¹) to about 0.01 s⁻¹ and pumping or pouring is a relatively high shear process with a shear rate in the range of greater than about 1 s⁻¹, more typically from 100s⁻¹ to 10,000 s⁻¹, and even more typically, from 100s⁻¹ to 1,000 s⁻¹.

In one embodiment, the composition of the present invention resists sedimentation or separation under low shear stress storage conditions yet is pumpable under elevated shear stress condition. In one such embodiment, the composition of the present invention exhibits a viscosity of from about 1 to about 10000 Pa.s, more typically from 5 to about 1000 Pa.s, even more typically from about 10 to about 500 Pa.s, at a shear rate of less than or equal to 0.01 s⁻¹ and exhibits a viscosity that is less than the viscosity exhibited at a shear rate of less than or equal to 0.01 s⁻¹, typically a viscosity of less than 10 Pa.s, more typically from about 0.1 to less than 10 Pa.s, and even more typically from about 0.1 to less than 5 Pa.s, at a shear rate of greater than or equal to 10 s⁻¹, more typically, greater than or equal to 100 s⁻¹.

In one embodiment, the composition of the present invention exhibits a viscosity greater than or equal to 10 Pa.s at a shear rate of less than or equal to 0.01 s⁻¹ and exhibits a viscosity of less than 10 Pa.s at a shear rate of greater than or equal to 10 s⁻¹, more typically, greater than or equal to 100 s⁻¹.

In one embodiment, the composition of the present invention exhibits a viscosity greater than or equal to 5 Pa.s at a shear rate of less than or equal to 0.01 s⁻¹ and exhibits a viscosity of less than 5 Pa.s at a shear rate of greater than or equal to 10 s⁻¹, more typically, greater than or equal to 100 s⁻¹.

In one embodiment, the composition of the present invention exhibits a viscosity greater than or equal to 1 Pa.s at a shear rate of less than or equal to 0.01 s⁻¹ and exhibits a viscosity of less than 1 Pa.s at a shear rate of greater than or equal to 10 s⁻¹, more typically, greater than or equal to 100 s⁻¹.

In one embodiment, the viscosity of the composition of the present invention as measured on Brookfield viscometer with a LV3 spindle is from about 1 to about 10000 Pa.s, more typically from 1 to about 1000 Pa.s, even more typically from about 10 to about 500 Pa.s, at a rotational speed of less than or equal to 0.01 rotation per minute (rpm) and exhibits a viscosity that is less than the viscosity exhibited at a rotational speed of less than or equal to 0.01 rpm, typically a viscosity of less than 10 Pa.s, more typically from about 0.1 to less than 10 Pa.s, and even more typically from about 0.1 to less than 5 Pa.s, at a rotational speed of greater than or equal to 10 rpm, more typically, greater than or equal to 100 rpm.

In one embodiment, the composition exhibits a yield strength of greater than 0 Pa, more typically greater than 0.01 Pa, even more typically from about 0.01 to about 10 Pa, still more typically from about 0.1 to about 5 Pa.

In one embodiment, the composition of the present invention also exhibits thixotropic properties. As used herein, the term "thixotropic" in reference to the flow properties of a composition means that the composition exhibits non-Newtonian shear thinning viscosity that is time dependent, i.e., the decrease in the viscosity of the composition that is brought about by increasing shear stress is reversible and the composition returns to its original state when the shear stress is discontinued.

In one embodiment, the adjuvant composition of the present invention is an opaque, pale straw colored to amber colored liquid suspension that is substantially uniform in visual appearance, without visible separation into layers or sedimentation of solid materials.

The adjuvant composition of the present invention exhibits good storage stability. The criteria for assessing storage stability are the extent to which, upon quiescent standing for a given period of time under given environmental conditions, the composition remains substantially homogeneous in visual appearance, without visible separation into layers of mutually insoluble liquid phases, separation of liquid from a thickened formulation, or formation of any solid precipitate, and the composition retains its rheological properties. In one embodiment, the adjuvant composition remains stable during storage at temperatures of from -16°C to 54°C for greater than or equal to 7 days, more typically for greater than or equal to 14 days, and even more typically for greater than or equal to 30 days. In one embodiment, the adjuvant composition remains stable during continuous freeze-thaw cycling for greater than or equal to 7 days, more typically for greater than or equal to 14 days, and even more typically for greater than or equal to 30 days, wherein one freeze-thaw cycle consists of a four hour dwell at 25°C and an eight hour ramp to -12°C to -10°C, a four hour dwell at a temperature of from -12°C to -10°C, and an eight hour ramp back to 25°C.

In one embodiment, the adjuvant composition of the present invention comprising surfactants (a) and (b) and liquid medium (c) is "self-emulsifying", that is, upon contacting the composition of the present invention with a volume of water, the oil component of the composition rapidly disperses in the water, without requiring mechanical agitation of the mixture of the composition of the present invention and the water. In one embodiment of the composition of the invention exhibits excellent dispersion or "blooming" performance, that is, the composition exhibits rapid, spontaneous dispersion of the composition in the volume of water upon contacting the composition with a volume of water, with little or no mechanical agitation of the mixture of the composition and water.

In one embodiment, the present invention is directed to a method for making an end use pesticide composition, comprising surfactants (a) and (b), liquid medium (c), and deposition aid polymer (d), and, thickener (e), with water and one or more pesticide compounds to provide the dilute aqueous pesticide composition.

In one embodiment, the present invention is directed to a method for making an end use pesticide composition, comprising mixing an adjuvant composition according to the present invention that comprises surfactants (a) and (b) and liquid medium (c) with water, deposition aid polymer (d), thickener (e) and one or more pesticide compounds to form the use pesticide composition

In one embodiment, the present invention is directed to a method for making an aqueous end use pesticide composition, comprising mixing an adjuvant composition according to the present invention that comprises surfactants (a) and (b) with an aqueous diluent, typically water, liquid medium (c), deposition aid polymer (d), thickener (e) and one or more pesticide compounds to form the use pesticide composition.

In one embodiment, the adjuvant composition of the present invention is mixed with an aqueous diluent, typically water, to form a dilute adjuvant mixture and one or more pesticide compounds are added to the dilute adjuvant mixture to form an aqueous end use pesticide composition.

In one embodiment, the adjuvant composition of the present invention is mixed with one or more pesticide compounds and the mixture of the adjuvant composition and one or more pesticide compounds is diluted with an aqueous diluent, typically water, to form an aqueous end use pesticide mixture.

In one embodiment, the adjuvant composition of the present invention and one or more pesticide compounds are simultaneously mixed with an aqueous diluent, typically water, to form an aqueous end use pesticide composition.

In one embodiment, the adjuvant composition of the present invention is diluted with an aqueous diluent, typically with water, in a ratio of from 1:10 to 1:1000, more typically about 1:50 to about 1:200, pbw adjuvant composition: pbw aqueous end use pesticide composition to form the aqueous end use pesticide composition.

A concentrated pesticide composition, comprising, based on 100 pbw of the composition:
(a) from about 0.16 to about 34 pbw, more typically from about 1 to about 20 pbw, of one or more first nonionic surfactants selected from the group consisting of fatty acid glycol ester surfactants, polyalkoxylated triglyceride surfactants, alkoxylated fatty alcohol surfactants, and sorbitan fatty acid ester surfactants;
(b) from greater than 0 to about 15 pbw, more typically from about 0.2 to about 2.7 pbw, of at least one of
   (b)(i) one or more second nonionic surfactants selected from the group consisting of polyalkoxylated alkylphenol surfactants, polyalkoxylated alkarylphenol surfactants, amine oxide surfactants, alkanolamide surfactants, glycoside surfactants, and/or
   (b)(ii) one or more anionic surfactants;
(c) from about 0.25 to about 97.5 pbw, more typically from about 20 to about 83.8 pbw, of a liquid medium comprising one or more fatty acid (C₁-C₃)alkyl esters;
(d) from greater than or equal to 0 to about 30 pbw, more typically from about 2 to about 10 pbw, of one or more water soluble deposition aid polymers selected from guars and guar derivatives;
(e) one or more thickening agents selected from silica, inorganic colloidal or colloid-forming clay particles;
(f) from about 2 to about 90 pbw, more typically from about 15 to about 65 pbw, of one or more pesticide compounds; and
(g) optionally, water.

In one embodiment, the concentrated pesticide composition of the present invention is diluted with an aqueous diluent, typically with water, in a ratio of from 1:10 to 1:1000, more typically about 1:50 to about 1:200, pbw adjuvant composition: pbw aqueous end use pesticide composition to form the aqueous end use pesticide composition.

An aqueous end use pesticide composition, comprising, based on 100 pbw of the composition:
(a) from about 0.016 to about 3.4 pbw, more typically from about 0.1 to about 0.75 pbw, of one or more first nonionic surfactants selected from the group consisting of fatty acid glycol ester surfactants, polyalkoxylated triglyceride surfactants, alkoxylated fatty alcohol surfactants, and sorbitan fatty acid ester surfactants;
(b) from greater than 0 to about 0.1.5 pbw, more typically from about 0.02 to about 0.27 pbw, of at least one of
   (b)(i) one or more second nonionic surfactants selected from the group consisting of polyalkoxylated alkylphenol surfactants, polyalkoxylated alkarylphenol surfactants, amine oxide surfactants, alkanolamide surfactants, glycoside surfactants, and/or
   (b)(ii) one or more anionic surfactants;
(c) from about 0.95 to about 9.75 pbw, more typically from about 2 to about 8.3 pbw, of a liquid medium comprising one or more fatty acid (C₁-C₃)alkyl esters;
(d) from greater than or equal to 0 to about 0.5 pbw, more typically from about 0.02 to about 0.2 pbw, of one or more water soluble deposition aid polymers selected from guars and guar derivatives;
(e) one or more thickening agents selected from silica, inorganic colloidal or colloid-forming clay particles;
(f) from about 0.2 to about 9 pbw, more typically from about 1.5 to about 6.5 pbw, of one or more pesticide compounds; and
(g) water.

Suitable pesticides are biologically active compounds used to control agricultural pests and include, for example, herbicides, plant growth regulators, crop dessicants, fungicides, bacteriocides, bacteriostats, insecticides, and insect repellants, as well as their water soluble salts and esters. Suitable pesticides include, for example, triazine herbicides such as metribuzin, hexaxinone, or atrazine; sulfonylurea herbicides such as chlorsulfuron; uracils such as lenacil, bromacil, or terbacil; urea herbicides such as linuron, diuron, siduron, or neburon; acetanilide herbicides such as alachlor, or metolachlor; thiocarbamate herbicides such as benthiocarb, triallate; oxadiazolone herbicides such as oxadiazon; phenoxyacetic acids; diphenyl ether herbicides such as fluazifop, acifluorfen, bifenox, or oxyfluorfen; dinitro aniline herbicides such as trifluralin; organophosphonate herbicides such as glufosinate salts and esters and glyphosate salts and esters; dihalobenzonitrile herbicides such as bromoxynil, or ioxynil, benzoic acid herbicides, dipyridilium herbicides such as paraquat. Suitable fungicides include, for example, nitrilo oxime fungicides such as cymoxanil; imidazole fungicides such as benomyl, carbendazim, or thiophanate-methyl; triazole fungicides such as triadimefon; sulfenamide fungicides, such as captan; dithio-carbamate fungicides such as maneb, mancozeb, or thiram; chloronated aromatic fungicides such as chloroneb; dichloro aniline fungicides such as iprodione, strobilurin fungicides such as kresoxim-methyl, trifloxystrobin or azoxystrobin; chlorothalonil; copper salt fungicides such as copper oxychloride; sulfur; phenylamides; and acylamino fungicides such as metalaxyl or mefenoxam. Suitable insecticides, include, for example, carbamate insecticides, such as methomyl, carbaryl, carbofuran, or aldicarb; organo thiophosphate insecticides such as EPN, isofenphos, isoxathion, chlorpyrifos, or chlormephos; organophosphate insecticides such as terbufos, monocrotophos, or terachlorvinphos; perchlorinated organic insecticides such as methoxychlor; synthetic pyrethroid insecticides such as fenvalerate, abamectin or emamectin benzoate, neonicotinoide insecticides such as thiamethoxam or imidacloprid; pyrethroid insecticides such as lambda-cyhalothrin, cypermethrin or bifenthrin, and oxadiazine insecticides such as indoxacarb, imidachlopryd, or fipronil. Suitable miticides include, for example, propynyl sulfite miticides such as propargite; triazapentadiene miticides such as amitraz; chlorinated aromatic miticides such as chlorobenzilate, or tetradifan; and dinitrophenol miticides such as binapacryl. Suitable nematicides include carbamate nematicides, such as oxamyl.

Pesticide compounds are, in general, referred herein to by the names assigned by the International Organization for Standardization (ISO). ISO common names may be cross-referenced to International Union of Pure and Applied Chemistry ("IUPAC") and Chemical Abstracts Service ("CAS") names through a number of sources.

In one embodiment, the one or more pesticide compounds comprise one or more compounds selected from herbicides, plant growth regulators, crop dessicants, fungicides, bacteriocides, bacteriostats, insecticides, miticides, nematocides, and insect repellants.

In one embodiment, the one or more pesticide compounds comprise an herbicide and the pesticide composition is an herbicide composition.

In one embodiment, the end use pesticide composition is a dilute herbicide composition that comprises one or more herbicide compounds selected from glyphosate, water soluble glyphosate salts, water soluble glyphosate esters, more typically selected from the sodium salt of glyphosate, the potassium salt of glyphosate, the ammonium salt of glyphosate, the dimethylamine salt of glyphosate, the isopropyl amine salt of glyphosate, and the trimesyl salt of glyphosate.

The end use pesticide composition may optionally further comprises a fertilizer. Such fertilizers can provide the primary nutrients of nitrogen, phosphorus and/or potassium such as urea ammonium nitrate, 30-0-0, 10-34-0, secondary nutrients sulfur, calcium, magnesium such as ammonium thiosulfate 12-0-0-26S, micronutrient fertilizers containing zinc, iron, molybdenum, copper, boron, chlorine, magnesium, for example, 0-0-1 3%-S; 3%-Zn; 2%-Fe; 2%-Mn. In one embodiment, the pesticide composition comprises from about 85 to about 99 pbw, more typically from about 90 to about 99 pbw, and even more typically from about 93 to about 99 pbw, of a mixture of fertilizer and water.

The end use pesticide composition may optionally comprise one or more additional ingredients known in the art, including, for example, water conditioners, such as for example, chelating agents, such as ethylenediamine tetraacetic acid, complexing agents, such as ammonium sulfate, antioxidants, such as tert-butylhydroquinone or butylated hydroxytoluene, antifoam agents, fillers, wetting agents, dispersing agents, spreading agents, pH adjusting agents such as citric acid, antifoam agents, such as silicone antifoams, binding agents, such as polycarboxylic polymers, stabilizers, such as xanthan gum, organic solvents, antifreeze agents, such as glycols, penetrants, bioactivators, and compatibilizing agents, such as phosphate esters.

In one embodiment, the present invention is directed to a method for controlling a target pest, comprising:
(1) mixing an adjuvant composition according to the present invention with water and one or more pesticide compounds to provide an end use pesticide composition, and
(2) applying the end use pesticide composition to the target pest and/or to the environment of the target pest.

In one embodiment, the adjuvant composition of the present invention is combined with a herbicide compound and applied in diluted form to a target plant and/or the environment of the target plant in a herbicidally effective amount is effective to control one or more target plant species, such as one or more plant species of the following genera: Abutilon, Amaranthus, Artemisia, Asclepias, Avena, Axonopus, Borreria, Brachiaria, Brassica, Bromus, Chenopodium, Cirsium, Commelina, Convolvulus, Cynodon, Cyperus, Digitaria, Echinochloa, Eleusine, Elymus, Equisetum, Erodium, Helianthus, Imperata, Ipomoea, Kochia, Lolium, Malva, Oryza, Ottochloa, Panicum, Paspalum, Phalaris, Phragmites, Polygonum, Portulaca, Pteridium, Pueraria, Rubus, Salsola, Setaria, Sida, Sinapis, Sorghum, Triticum, Typha, Ulex, Xanthium and Zea, including annual broadleaf species such as, for example, velvetleaf (*Abutilon theophrasti*), pigweed (*Amaranthus* spp.), buttonweed (*Borreria* spp.), oilseed rape, canola, indian mustard, etc. (*Brassica* spp.), commelina (*Commelina* spp.), filaree (*Erodium* spp.), sunflower (*Helianthus* spp.), morning glory (*Ipomoea* spp.), kochia (*Kochia scoparia*), mallow (*Malva* spp.), wild buckwheat, smartweed, etc. (*Polygonum* spp.), purslane (*Portulaca* spp.), russian thistle (*Salsola* spp.), sida (*Sida* spp.), wild mustard (*Sinapis arvensis*) and cocklebur (*Xanthium* spp.), annual narrowleaf species such as for example, wild oat (*Avena fatua*), carpetgrass (*Axonopus* spp.), downy brome (*Bromus tectorum*), crabgrass (*Digitaria* spp.), barnyardgrass (*Echinochloa crus-galli*), goosegrass (*Eleusine indica*), annual ryegrass (*Lolium multiflorum*), rice (*Oryza sativa*), ottochloa (*Ottochloa nodosa*), bahiagrass (*Paspalum notatum*), canarygrass (*Phalaris* spp.), foxtail (*Setaria* spp.), wheat (*Triticum aestivum*) and corn (*Zea mays*), perennial broadleaf species such as, for example, mugwort (*Artemisia* spp.), milkweed (*Asclepias* spp.), canada thistle (*Cirsium arvense*), field bindweed (*Convolvulus arvensis*) and kudzu (*Pueraria* spp.), perennial narrowleaf species such as for example, brachiaria (*Brachiaria* spp.), bermudagrass (*Cynodon dactylon*), yellow nutsedge (*Cyperus esculentus*), purple nutsedge (*C. rotundus*), quackgrass (*Elymus repens*), lalang (*Imperata cylindrica*), perennial ryegrass (*Lolium perenne*), guineagrass (*Panicum maximum*), dallisgrass (*Paspalum dilatatum*), reed (*Phragmites* spp.), johnsongrass (*Sorghum halepense*) and cattail (*Typha* spp.), and other perennial species such as, for example, horsetail (*Equisetum* spp.), bracken (*Pteridium aquilinum*), blackberry (*Rubus* spp.) and gorse (*Ulex europaeus*).

In one embodiment, the end use pesticide composition is applied to foliage of a target plant at a rate of from about 0.25 pint, more typically about 0.5 pint, to about 5 pints, even more typically from about 1 pint to about 4 pints, as expressed in terms of the above described pesticide concentrate composition embodiment of the pesticide composition of the present invention (that is, comprising, based on 100 pbw of such composition, from about 2 to about 90 pbw, more typically from about 15 to about 65 pbw of the one or more pesticide compounds) per acre.

In one embodiment, the end use pesticide composition is spray applied via conventional spray apparatus to foliage of one or more target plants present on an area of ground at a rate of from about 1 gallon to about 200 gallons, more typically about 5 gallons to 25 gallons, of the end use pesticide composition per acre of ground.

### Examples 1-4

The compositions of Examples 1-4 were made by adding, in the order listed and in the amounts set forth in TABLE I below, an oil (methylated seed oil, methyl oleate), a first thickener (organic derivative of hectorite clay. Bentone 27V, Elementis), an activator for the thickener (propylene carbonate), an emulsifier blend selected from a first emulsifier blend (Emulsifier Blend 1"), and a second emulsifier blend ("Emulsifier Blend 2, a water soluble deposition aid polymer (hydroxypropyl guar, Jaguar HP 120, Rhodia Inc.), an anionic surfactant (sodium N-Methyl oleoyl taurate (Geropon T77, Rhodia Inc.), and a second thickener (fumed hydrophilic silica (Aerosil R 974, Evonik Industries), to a homogenizer (Ultra Turrax high speed homogenizer), and blending the composition after each addition. The composition of Emulsifier Blends 1 and 2 is given below:

**Emulsifier Blend 1**

| **Ingredients (by Trade name)** | **Ingredients (by Generic name)** | **Amount (wt%)** |
|---|---|---|
| Alkamuls PSTO-20 (Rhodia Inc.) | Polysorbate 85 | 60% |
| Alkamuls R81 (Rhodia Inc.) | ethoxylated castor oil | 27% |
| Rhodacal 60/BE (Rhodia Inc.) | Linear dodecylbenzene sulphonate, calcium salt in 2-ethylexanol solution, | 13% |

**Emulsifer Blend 2**

| **Ingredients (by Trade name)** | **Ingredients (by Generic name)** | **Amount (wt%)** |
|---|---|---|
| Alkamuls PSTO-20 (Rhodia Inc.) | Polysorbate 85 | 59.38% |
| Alkamuls R81 (Rhodia Inc.) | ethoxylated castor oil | 28.12% |
| Rhodacal 60/BE (Rhodia Inc.) | Linear dodecylbenzene sulphonate, calcium salt in 2-ethylexanol solution | 12.5% |

**TABLE I**

| **Material** | **Amount (wt%)** | | | |
|---|---|---|---|---|
| | **EX 1** | **EX 2** | **EX 3** | **EX 4** |
| Oil | 70 | 70 | 60.75 | 62 |
| Thickener 1 | 2.5 | 2 | 2.5 | 3 |
| Activator for thickener 1 | 1 | 1 | 0.75 | 1 |
| Emulsifer Blend 1 | 20.5 | 20.5 | -- | -- |
| Emulsifer Blend 2 | -- | -- | 16 | 14 |
| Deposition aid polymer | 5 | 5 | 20 | 20 |
| Water | -- | 0.5 | -- | -- |
| Anionic surfactant | 0.5 | 0.5 | -- | -- |
| Thickener 2 | 0.5 | 0.5 | -- | -- |

The appearance of each of the compositions of Examples 1-4 was evaluated at room temperature by visual inspection. The viscosity of each of the compositions of Examples 1-4 was measured using a Brookfield Rheometer equipped with a LV3 spindle at 20 rpm.

The emulsion performance of the adjuvant compositions of Examples 1, 2, 3, and 4 was evaluated, using Collaborative International Pesticides Analytical Council ("CIPAC") Method MT 36, "Emulsion Characteristics of Emulsifiable Concentrates", as follows. A 5 milliliter ("mL") aliquot of the concentrated adjuvant composition was mixed with water having a water hardness of from about 30 to about 335 ppm in a 100 mL graduated cylinder to give 100 milliliters of aqueous emulsion. The initial emulsifiability of the adjuvant composition was evaluated by inverting the cylinder one time and observing, after the emulsion had been allowed to stand for 30 seconds, whether or not the mixture form a macroscopically uniform emulsion and whether any creaming or free oil was present. The stability of the emulsion was then evaluated by inverting the cylinder ten times and observing, after the emulsion had been allowed to stand for 24 hours, whether or not the mixture remained in the form of a macroscopically uniform emulsion and the amount, if any, of free oil or cream that separated from the emulsion. Results are given in TABLE II below.

The dispersibility, or "blooming", of the adjuvant compositions of Examples 1, 2, 3, and 4 was evaluated by adding, by pipette, from 1 to 2 mL of the adjuvant composition into a graduated cylinder containing 250 mL water having a water hardness of from about 30 to about 335 ppm at room temperature, inverting the cylinder and observing whether or not the adjuvant composition had dispersed in the water. Results are given in TABLE II below.

**TABLE II**

| **Property** | **EX 1** | **EX 2** | **EX 3** | **EX 4** |
|---|---|---|---|---|
| Appearance | Yellow fluid | Yellow fluid | Yellow fluid | Yellow fluid |
| Viscosity (Pa.s) | 1.5 - 2.0 | 1.0 | 3.1 | 2.7 |
| Initial Emulsifiability | Good | Good | Good | Good |
| Emulsion stability | Good | Good | Good | Good |
| Dispersibility | Good | Good | Good | Good |

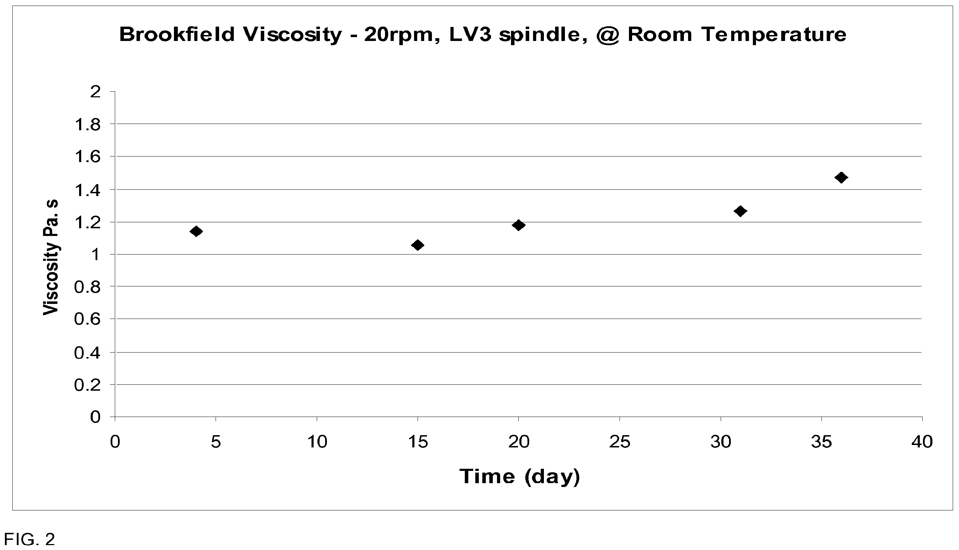

The viscosity of the composition of Example 1 was measured periodically at room temperature using Brookfield Rheometer equipped with a LV3 spindle at 20 rpm over a time period of about 36 days. Results are given in FIG. 1.

The stability of the compositions of Examples 1-4 was evaluated by visual observation of samples of the composition of about 4 to 8 ounces each under different temperature conditions. Good stability was defined as a formulation with minimal syneresis, that is, little or no separation of liquid from the thickened formulation, no particulate settling, and retention of the characteristics and properties, such as rheological properties, of the sample. Slight syneresis is acceptable because upon mixing the formulation becomes uniform. Stability results are given in TABLE III below. The results showed the composition of Example 1 exhibited good storage stability under each of the different storage conditions. The composition of Example 1 was evaluated 1, 2, 3, and 4 weeks of storage at Room temperature ("RT"), 54°C, 45°C, 4°C, or-16°C, and after 1, 2, 3, and 4 weeks of freeze-thaw cycling between 25°C and -10°C, with each cycle consisting of 4 hours at 25°C an 8 hour ramp to -10°C, 4 hours at -10°C and an 8 hour ramp to 25°C ("FT"). The samples that gelled or froze at 4°C and -16°C each exhibited their original properties upon thawing.

**TABLE III**

| **Stability, EX 1** | | | | | | |
|---|---|---|---|---|---|---|
| | **RT** | **54°C** | **45°C** | **4°C** | **-16°C** | **FT** |
| 1 week | ok | ok | ok | ok | ok | ok |
| 2 weeks | ok | ok | ok | gel | frozen | ok |
| 3 weeks | ok | ok | ok | frozen | frozen | ok |
| 4 weeks | ok | ok | ok | frozen | frozen | ok |

The composition of Example 2 was tested and exhibited good stability after 48 hours and after 1 week at RT and 48 hours and after 1 week at 54*C. The compositions of Example 3 and Example 4 were each tested and exhibited good stability after 48 hours and after 1 week at RT.

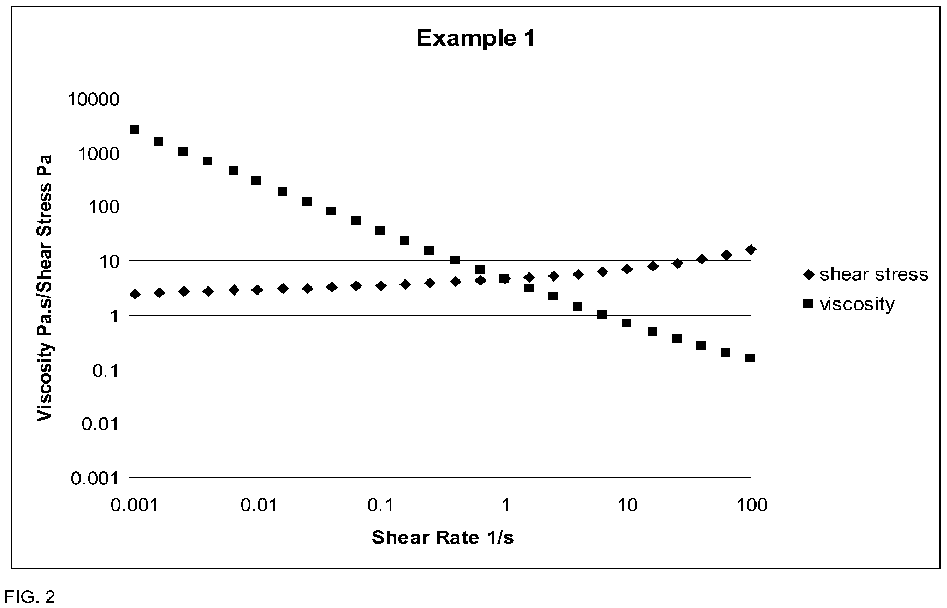

The composition of Example 1 was subjected to rheological measurements, performed on an AR-G2 stress-controlled rheometer (TA Instruments) using Cross Hatched steel plate geometry equipped with a Peltier-based temperature control. The sample temperature was maintained at 25°C. The steady rate sweep test was applied. A plot of viscosity (in Pascal seconds (Pa.s)) vs. shear rate (in reciprocal seconds (1/s)) for the composition of Example 1 is shown FIG. 2. The composition of Example 1 was found to be a shear-thinning system with high viscosity under low shear conditions and low viscosity under high shear conditions. As shown in FIG. 2, the viscosity of the composition of Example 1 was relatively high under low shear conditions, which provides resistance to separation of the components of the composition, such as the settling of the guar particles, during storage, and the viscosity of this composition was relatively low under high shear conditions, which renders the composition is quite pumpable and easy to handle under high shear conditions. A plot of shear rate (in reciprocal seconds (1/s)) vs. shear stress (in Pascals (Pa)) for the composition of Example 1 is also shown in FIG. 2. Based on the shear rate/ shear stress results, the composition of Example 1 was found to have a yield value of about 1.42 Pa.

### Example 5

The composition of Example 5 was made as follows. An oil (methylated seed oil, methyl soyate), a first thickener (organic derivative of hectorite clay. (Bentone 27V, Elementis) "Thickener 1"), and an activator for the first thickener (propylene carbonate) were mixed at 7000 rpm in a homogenizer (Ross Rotor/Stator homogenizer). The oil/thickener/activator pre-mix was then combined with an emulsifier blend ("Emulsifier Blend 3"), propylene glycol, water, an anionic surfactant (sodium oleyl N-methyl taurate (Geropon T77, Rhodia Inc.)), a second thickener (hydrophobic fumed silica (Aerosil R974, Evonik Industries) "Thickener 2"), and a water soluble deposition aid polymer(non-derivitized guar (Jaguar 308NB, Rhodia Inc.)), and mixed with a Cowles blade at 500 rpm. The composition of Emulsifier Blend 3 is given below.

**Emulsifier Blend 3:**

| **Ingredients (by Trade name)** | **Ingredients (by Generic name)** | **Amount (wt%)** |
|---|---|---|
| Rhodasurf DA530 | Isodecyl alcohol ethyoxylate | 40.15 |
| Igepal CO630 | nonylphenol ethoxylate | 25.15 |
| 25% NaOH | | 2.4 |
| Water | | 3.2 |
| Rhodafac PE510 | nonylphenol ethoxy phosphate | 22.05 |
| Soprophor 3D33 | trisylphenol ethoxy phosphate | 7.05 |

The relative amounts of the various ingredients of the composition of Example 5 are given in TABLE IV below.

**TABLE IV**

| **Material** | **Amount (wt%)** |
|---|---|
| Oil | 71.00% |
| Thickener 1 | 2.50% |
| Activator | 1.00% |
| Emulsifer Blend 3 | 14.85% |
| Propylene Glycol | 1.25% |
| Water | 4.00% |
| Thickener 2 | 0.85% |
| Anionic surfactant | 0.55% |
| Water Soluble Deposition Aid Polymer | 4.00% |

The viscosity of the composition of Example 5 was measured at 2°C, room temperature ("RT"), and 45°C using a Brookfield Rheometer, LV3 spindle at 30 rpm. The initial emulsifiability, emulsion stability, and dispersibility of the adjuvant composition of Example 5 was evaluated as described above in regard to Examples 1 to 4. Results are given in TABLE V below.

**TABLE V**

| **Property** | |
|---|---|
| Appearance | Pale yellow to amber fluid |
| Viscosity (Pa. s) (Brookfield LV3 spindle at 30 rpm) | 1 - 2 |
| Initial emulsifiability | Good, no free oil or creaming |
| Emulsion stability | Good, slight creaming |
| Dispersibility | Good |

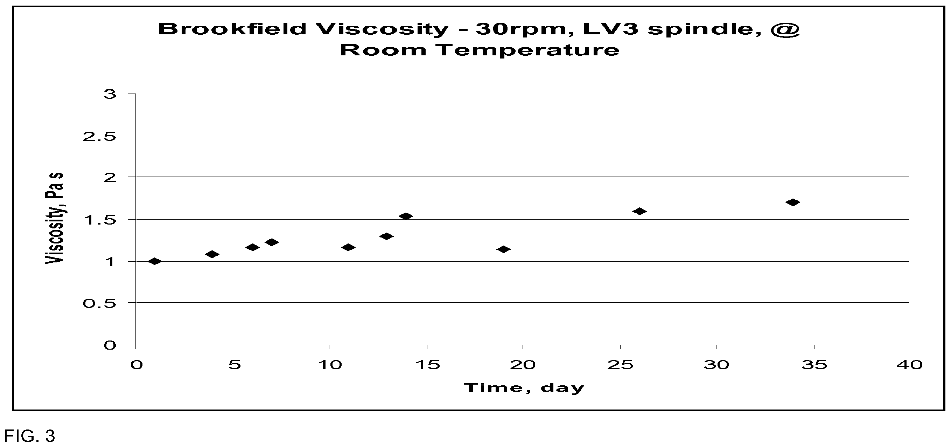

The viscosity of the composition of Example 5 was measured periodically at room temperature using Brookfield Rheometer equipped with a LV3 spindle at 20 rpm over a time period of about 36 days. Results are given in FIG. 3.

The stability of the composition of Example 5 was evaluated after 1, 2, 3, and 4 weeks at room temperature ("RT"), 4°C, 45°C, and 54°C in the manner described above in regard to Examples 1-4. Results are given in TABLE VI below. The samples that gelled or froze at 4°C and -16°C each exhibited their original properties upon thawing.

**TABLE VI**

| **Stability** | **RT** | **4°C** | **45°C** | **54°C** | **FT** | **-16°C** |
|---|---|---|---|---|---|---|
| 1 week | ok | gel | ok | ok | ok | frozen |
| 2 week | ok | gel | <5% syneresis | <5% syneresis | ok | frozen |
| 3 week | ok | gel | <5% syneresis | <5% syneresis | ok | frozen |
| 4 week | ok | gel | <5% syneresis | 5% syneresis | ok | frozen |

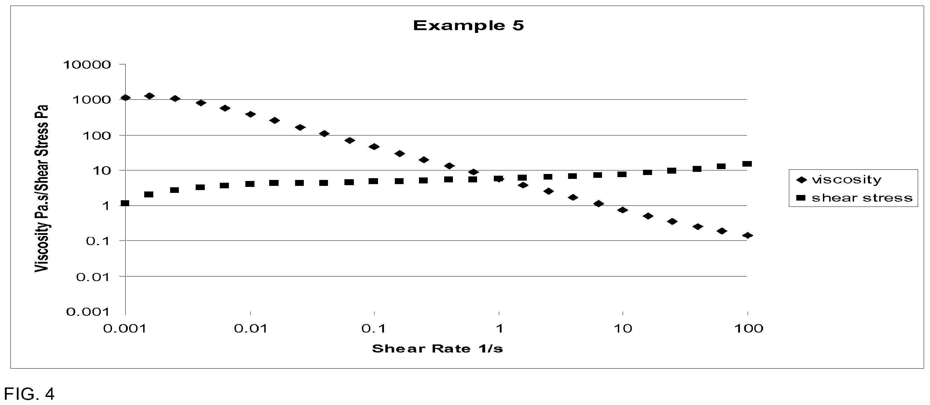

The composition of Example 5 was subjected to rheological measurements, performed on an AR-G2 stress-controlled rheometer (TA Instruments) using Cross Hatched steel plate geometry equipped with a Peltier-based temperature control. The sample temperature was maintained at 25°C. The steady rate sweep test was applied. A plot of viscosity (in Pascal seconds (Pa.s)) vs. shear rate (in reciprocal seconds (1/s)) for the composition of Example 5 is shown FIG. 4. The composition of Example 5 was found to be a shear-thinning system with high viscosity under low shear conditions and low viscosity under high shear conditions. As shown in FIG. 4 the viscosity of the composition of Example 5 was relatively high under low shear conditions, which provides resistance to separation of the components of the composition, such as the settling of the guar particles, during storage, and the viscosity of this composition was relatively low under high shear conditions, which renders the composition is quite pumpable and easy to handle under high shear conditions. A plot of shear rate (in reciprocal seconds (1/s)) vs. shear stress (in Pascals (Pa)) for the composition of Example 5 is also shown in FIG. 4. Based on the shear rate/ shear stress results, the composition of Example 5 was found to have a yield value of about 1.12 Pa.

### Example 6

The composition of Example 6 was made as follows. An oil (methylated seed oil, methyl soyate), a first thickener (organic derivative of hectorite clay. (Bentone 27V, Elementis)), and activator for the first thickener (propylene carbonate) were mixed at 7000 rpm in a homogenizer (Ross Rotor/Stator homogenizer). The oil/thickener/activator pre-mix was then combined with an emulsifier blend ("Emulsifier Blend 4"), propylene glycol, water, an anionic surfactant (sodium oleyl N-methyl taurate (Geropon T77, Rhodia Inc.)), a second thickener (hydrophobic fumed silica (Aerosil R974, Evonik Industries)), and a water soluble deposition aid polymer(non-derivitized guar (Jaguar 308NB, Rhodia Inc.)) and mixed with a Cowles blade at 500 rpm. The composition of Emulsifier Blend 4 is given below.

**Emulsifier Blend 4:**

| **Ingredients (by Trade name)** | **Ingredients (by Generic name)** | **Amount (wt%)** |
|---|---|---|
| Alkamuls 400 MO, Rhodia Inc. | PEG monoleate | 58% |
| Rhodasurf BC610, Rhodia Inc. | tridecyl alcohol ethoxylate | 31.5% |
| Soprophor TS10, Rhodia Inc. | ethoxylate tristyrylphenol 10EO | 10.5% |

The relative amounts of the various ingredients of the composition of Example 6 are given in TABLE VII below.

**TABLE VII**

| **Material** | **Amount (wt%)** |
|---|---|
| Oil | 71.00% |
| Thickener 1 | 2.50% |
| Activator | 1.00% |
| Emulsifier Blend 4 | 14.85% |
| Propylene Glycol | 1.25% |
| Water | 4.00% |
| Thickener 2 | 0.85% |
| Anionic surfactant | 0.55% |
| Water Soluble Deposition Aid Polymer | 4.00% |

The appearance of each of the composition of Example 6 was evaluated at room temperature by visual inspection. The viscosity of the composition of Example 6 was measured at 2°C, room temperature ("RT"), and 45°C using a Brookfield Rheometer, LV3 spindle at 12 rpm. The initial emulsifiability, emulsion stability, and dispersibility of the adjuvant composition of Example 6 was evaluated as described above in regard to Examples 1 to 4.. Results are given in TABLE VIII below.

**TABLE VIII**

| **Property** | |
|---|---|
| Appearance | Pale yellow to amber fluid |
| Viscosity (Pa.s) (Brookfield LV3 spindle at 30 rpm) | 15 - 320 |
| Initial emulsifiability | Good, no free oil or creaming |
| Emulsion stability | Good, slight creaming |
| Dispersibility | Good |

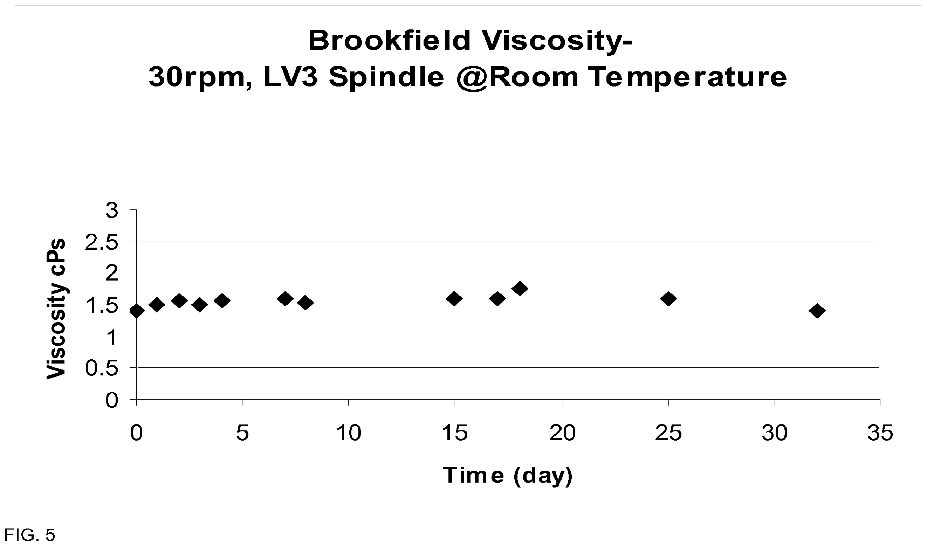

The viscosity of the composition of Example 6 was measured periodically at room temperature using Brookfield Rheometer equipped with a LV3 spindle at 20 rpm over a time period of about 36 days. Results are given in FIG. 5.

The stability of the composition of Example 6 was evaluated after 1, 3, and 4 weeks at -16°C, room temperature ("RT"), 4°C, 45°C, and 54°C and under freeze thaw cycling conditions in the manner described above in regard to Examples 1-4. Results are given in TABLE IX below.

**TABLE IX**

| **Stability, Ex 6** | | | | | | |
|---|---|---|---|---|---|---|
| | **RT** | **4°C** | **45°C** | **54°C** | **FT** | **-16°C** |
| 1 week | ok | ok | ok | <1% syneresis | ok | frozen |
| 3 week | ok | gel | ≤5% syneresis | ≤5% syneresis | ok | frozen |
| 4 week | ok | gel | ≤5% syneresis | ≤5% syneresis | ok | frozen |

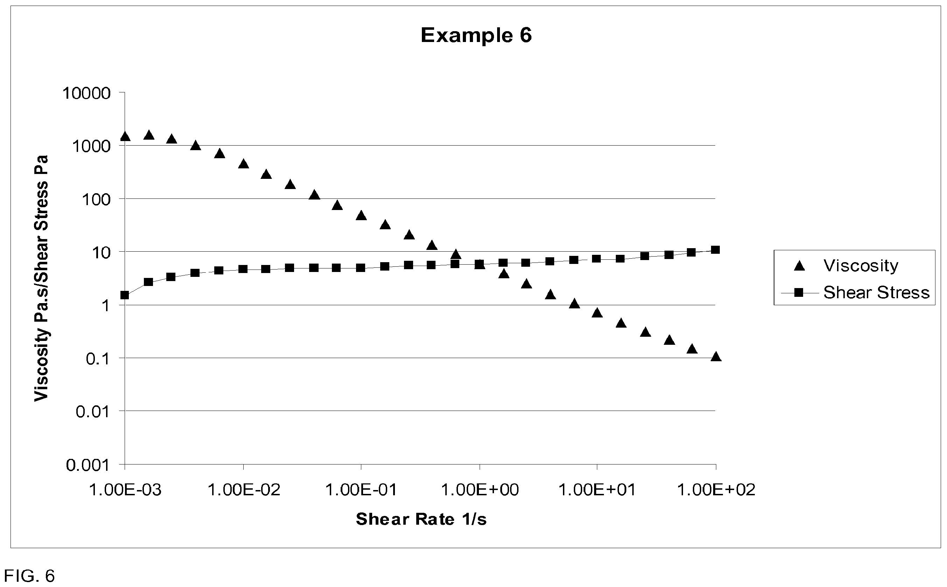

The composition of Example 6 was subjected to rheological measurements, performed on an AR-G2 stress-controlled rheometer (TA Instruments) using Cross Hatched steel plate geometry equipped with a Peltier-based temperature control. The sample temperature was maintained at 25°C. The steady rate sweep test was applied. A plot of viscosity (in Pascal seconds (Pa.s)) vs. shear rate (in reciprocal seconds (1/s)) for the composition of Example 6 is shown FIG. 6 The composition of Example 6 was found to be a shear-thinning system with high viscosity under low shear conditions and low viscosity under high shear conditions. As shown in FIG. 6 the viscosity of the composition of Example 1 was relatively high under low shear conditions, which provides resistance to separation of the components of the composition, such as the settling of the guar particles, during storage, and the viscosity of this composition was relatively low under high shear conditions, which renders the composition is quite pumpable and easy to handle under high shear conditions. A plot of shear rate (in reciprocal seconds (1/s)) vs. shear stress (in Pascals (Pa)) for the composition of Example 6 is also shown in FIG. 6. Based on the shear rate/ shear stress results, the composition of Example 6 was found to have a yield value of about 1.61 Pa.

### Reference Examples 7-10 and Reference Comparative Example C1

An emulsifier blend ("Emulsifier Blend 5") comprising 85 pbw of a first nonionic surfactant (an fatty acid glycol ester (polyethylene glycol monooleate, Alkamuls 400 MO, Rhodia Inc.)), 7 pbw of a second nonionic surfactant (fatty alcohol alkoxylate (Tridecyl alcohol (6 moles EO) ethoxylate , Rhodasurf BC 610, Rhodia Inc.)), and 7 pbw of a third nonionic surfactant (an alkaryl phenol ethoxylate (tristyrylphenol (10 moles EO) ethoxylate, Soprophor TS 10, Rhodia Inc.)), and 1 pbw water was made by mixing the surfactants and water.

The compositions of Reference Examples 7 and 8 were made by mixing Emulsifier Blend 5 and with a fatty acid methyl ester (methylated seed oil, methyl soyate) in the amounts shown in TABLE X below. Each of the compositions of Reference Examples 12 and 13 was a homogeneous liquid that remained stable for greater than 1 month at room temperature.

**TABLE X Composition of Reference Examples 7 and 8**

| Component | Ref. Ex. 7 amount (wt%) | Ref. Ex. 8 Amount (wt%) |
|---|---|---|
| Fatty Acid Methyl Ester | 96 | 90 |
| Emulsifier Blend 5 | 4 | 10 |

The aqueous spray compositions of Reference Examples 9 and 10 were made by diluting the compositions of Reference Examples 7 and 8, respectively, in CIPAC water of hardness 340 ppm and a pesticide composition of glyphosate-potassium salt (Roundup Powermax, Monsanto) was added to the mixture. The aqueous spray composition of Reference Comparative Example C1 was made by diluting the glyphosate-potassium salt pesticide composition in the CIPAC water in the same manner as Reference Examples 7 and 8, except that Reference Comparative Example C1 lacked the fatty acid methyl ester/emulsifier blend component of Reference Examples 7 and 8. The relative amount of each component in compositions of Reference Examples 9 and 10 and Reference Comparative Example C1 is summarized in TABLE XX below. The aqueous compositions thus obtained were each sprayed through a single, stationary Teejet XR8002 flat fan nozzle at a pressure of 40 psi in a flow-controlled hood (speed ∼1.6 MPH) and the droplet size distribution was measured perpendicular to the plane of spray pattern and 30 cm below the nozzle tip. A HELOS VARIO particle size analyzer (Sympatec) was used to measure droplets generated in spray compositions using a R7 lens. The results for volume percentage of driftable fine droplets (droplets below 150 µm in size, expressed as volume %) for each composition are given in Table XI below. As seen from the TABLE XI, the compositions of Reference Examples 9 and 10 each reduced the amount of droplets of less than 150 µm in size (and thus increased the volume of desirable size droplets) significantly compared to the composition of Reference Comparative Example C1.

**Table XI: Compositions and drift control data on Reference Examples. 9 and 10 and Reference comparative example C1**

| **Example #** | **Composition** | **Droplet <150µm (Volume %)** |
|---|---|---|
| Ref. C.Ex. C1 | 2.25 wt% glyphosate potassium salt (Roundup Powermax™, Monsanto) in water | 57.3 |
| Ref. Ex. 9 | 0.5 wt% Ref. Ex. 12 + 2.25 wt% glyphosate potassium salt (Roundup Powermax™, Monsanto) in water | 31.3 |
| Ref. Ex. 10 | 0.5 wt% Ref. Ex. 13 + 2.25 wt% glyphosate potassium salt (Roundup Powermax™, Monsanto) in water | 32.3 |

### Examples 11-15 and Comparative Example C2

The composition of claim 11 was made as follows by combining the materials listed in the relative amounts indicated in TABLE XII below. A first quantity of fatty acid methyl ester (methyl soyate) was charged to a mixing vessel and agitation was begun. A polar activator (propylene carbonate) was added to the agitated fatty acid methyl ester and a clay thickener (Bentone 34) was then slowly added to the agitated mixture. The fatty acid methyl ester/polar activator/clay thickener mixture was then subjected to high shear by cycling the mixture through a mill to activate the clay thickener. A second quantity of fatty acid methyl ester (methyl soyate) was then added to the agitated fatty acid methyl ester/polar activator/clay thickener mixture in the mixing vessel. A first non-ionic surfactant (a fatty acid glycol ester (polyethylene glycol-8 monooleate, Alkamuls 400 MO, Rhodia Inc.)), a second non-ionic surfactant (an alkoxylated fatty alcohol (tridecyl alcohol (6 mole EO) ethoxylate, Rhodasurf BC-610, Rhodia Inc.)) and a third nonionic surfactant (an alkaryl phenol ethoxylate (tristyryl phenol (10 moles EO) ethoxylate, Soprophor TS-10)) were then added in series to the agitated mixture. A water miscible organic liquid (propylene glycol) and water were then added to the agitated mixture. A fumed silica thickener (Aerosil R974, Evonik Industries) was then added to the agitated mixture and the resulting mixture was then circulated through a static mixer to disperse the fumed silica thickener in the mixture. An anionic surfactant (76 wt% sodium oleyl N-methyl taurate, Geropon T77, Rhodia Inc.) was then added to the agitated mixture in the mixing vessel. A water soluble deposition aid polymer (non-derivatized guar gum, Jaguar 308NB, Rhodia Inc.) was then added to the agitated mixture and the agitation was continued to the extent required to disperse the polymer.

**TABLE XII: Adjuvant Composition of Example 11**

| **Material** | **Amount (pbw per 100 pbw of composition)** |
|---|---|
| Fatty acid methyl ester, first quantity | 45.00 |
| Polar activator for clay thickener | 1.00 |
| Clay thickener | 3.00 |
| Fatty acid methyl ester, second quantity | 26.00 |
| First nonionic surfactant (fatty acid glycol ester) | 8.50 |
| Second nonionic surfactant (alkoxylated fatty alcohol) | 4.50 |
| Third nonionic surfactant (alkaryl phenol ethoxylate) | 1.50 |
| Water miscible organic liquid | 1.20 |
| Water | 3.80 |
| Fumed silica thickener | 1.00 |
| Anionic surfactant (76 wt% taurate) | 0.50 |
| Water soluble deposition aid polymer | 4.00 |

The aqueous spray compositions of Examples 12-15 were made as follows: first the composition of Example 11 was added to the CIPAC water and then the pesticide composition of glyphosate-potassium salt (Roundup Powermax) was added to the solution. Subsequently an aqueous solution of ammonium sulfate salt (40% ammonium sulfate in water) was added to the mixture. The aqueous spray composition of Comparative Example C2 was made by diluting the pesticide composition of Glyphosate-potassium salt and aqueous solution of ammonium sulfate salt in the CIPAC water in the same manner as examples 12-15, except that Comparative Example C2 lacked the adjuvant composition of Example 11. The relative amount of each component in compositions of Examples 12-15 and Comparative Example C2 are summarized in Table XVIII below. The aqueous compositions thus obtained were each sprayed through a single, stationary XR8002 flat fan nozzle or a AIXR11002 Air Induction nozzle or a TT1102 turbojet nozzle (Teejet) at a pressure of 40 psi in a flow-controlled hood (speed ∼1.6 MPH) and the droplet size distribution was measured perpendicular to the plane of spray pattern and 30 cm below the nozzle tip. A HELOS VARIO particle size analyzer (Sympatec) was used to measure droplets generated in spray compositions using a R7 lens. The amount of driftable fines (of droplets below 150 µm in size, expressed as volume %) for each composition are given in TABLE XIII below. As seen from the results in TABLE XIII, the compositions of Examples 12-15 each reduced driftable fines (increased the volume of desirable size droplets) significantly compared to the composition of Comparative Example C2.

**Table XIII: Compositions and drift control data on Examples. 12-15 and Comparative Example C2**

| **Nozzle** | **Example #** | **Composition** | **Droplet <150µm (Volume %)** |
|---|---|---|---|
| XR8002 | C.Ex. C2 | 2.25 wt% Glyphosate potassium salt + 5% aqueous solution of Ammonium sulfate in water | 60.0 |
| | Ex. 12 | 0.1 wt% Ex. 18 + 2.25 wt% Glyphosate potassium salt + 5% aqueous solution of Ammonium sulfate in water | 40.2 |
| | Ex. 13 | 0.5 wt% Ex. 18 + 2.25 wt% Glyphosate potassium salt + 5% aqueous solution of Ammonium sulfate in water | 42 |
| | Ex. 14 | 0.75 wt% Ex. 18 + 2.25 wt% Glyphosate potassium salt + 5% aqueous solution of Ammonium sulfate in water | 41.9 |
| | Ex. 15 | 1.5 wt% Ex. 18 + 2.25 wt% Glyphosate potassium salt + 5% aqueous solution of Ammonium sulfate in water | 44.6 |
| AIXR11002 | C.Ex. C2 | 2.25 wt% Glyphosate potassium salt + 5% aqueous solution of Ammonium sulfate in water | 26.0 |
| | Ex. 12 | 0.1 wt% Ex. 18 + 2.25 wt% Glyphosate potassium salt + 5% aqueous solution of Ammonium sulfate in water | 12.2 |
| | Ex. 13 | 0.5 wt% Ex. 18 + 2.25 wt% Glyphosate potassium salt + 5% aqueous solution of Ammonium sulfate in water | 10.8 |
| | Ex. 14 | 0.75 wt% Ex. 18 + 2.25 wt% Glyphosate potassium salt + 5% aqueous solution of Ammonium sulfate in water | 10.4 |
| | Ex. 15 | 1.5 wt% Ex. 18 + 2.25 wt% Glyphosate potassium salt + 5% aqueous solution of Ammonium sulfate in water | 11.8 |

| **Nozzle** | **Example #** | **Composition** | **Droplet of size <150µm (Volume %)** |
|---|---|---|---|
| TT11002 | C.Ex. C2 | 2.25 wt% Glyphosate potassium salt + 5% aqueous solution of Ammonium sulfate in water | 33.2 |
| | Ex. 12 | 0.1 wt% Ex. 18 + 2.25 wt% Glyphosate potassium salt + 5% aqueous solution of Ammonium sulfate in water | 27.5 |
| | Ex. 13 | 0.5 wt% Ex. 18 + 2.25 wt% Glyphosate potassium salt + 5% aqueous solution of Ammonium sulfate in water | 23.8 |
| | Ex. 14 | 0.75 wt% Ex. 18 + 2.25 wt% Glyphosate potassium salt + 5% aqueous solution of Ammonium sulfate in water | 22.8 |
| | Ex. 15 | 1.5 wt% Ex. 18 + 2.25 wt% Glyphosate potassium salt + 5% aqueous solution of Ammonium sulfate in water | 18.5 |

## Claims

1. An agricultural adjuvant composition, comprising, based on 100 pbw of the adjuvant composition:
(a) one or more first nonionic surfactants selected from the group consisting of fatty acid glycol ester surfactants, polyalkoxylated triglyceride surfactants, alkoxylated fatty alcohol surfactants, and sorbitan fatty acid ester surfactants;
(b) at least one of
(b)(i) one or more second nonionic surfactants selected from the group consisting of polyalkoxylated alkylphenol surfactants, polyalkoxylated alkarylphenol surfactants, amine oxide surfactants, alkanolamide surfactants, and glycoside surfactants, and/or
(b)(ii) one or more anionic surfactants,
wherein the one or more first nonionic surfactants (a) and the one or more second nonionic surfactants (b)(i) are present in a combined amount of 5 pbw to 30 pbw;
(c) 50 pbw to 85 pbw of a liquid medium comprising one or more fatty acid (C₁-C₃)alkyl esters;
(d) 1 pbw to 20 pbw of one or more water soluble deposition aid polymers selected from guars and guar derivatives; and
(e) greater than 0 pbw to 10 pbw of one or more thickening agents selected from silica, inorganic colloidal or colloid-forming clay particles.

2. The agricultural adjuvant composition of claim 1, wherein the composition comprises one or more first nonionic surfactants selected from the group consisting of fatty acid glycol ester surfactants and alkoxylated fatty alcohol surfactants.

3. The agricultural adjuvant composition of claim 1, wherein the composition comprises one or more first nonionic surfactants selected from alkoxylated castor oil surfactants and sorbitan fatty acid ester surfactants, and the composition comprises at least one of:
(P1) one or more second nonionic surfactants (b)(i) selected from the group consisting of polyalkoxylated alkarylphenol surfactants, amine oxide surfactants, alkanolamide surfactants, and glycoside surfactants; or
(P2) one or more anionic surfactants (b)(ii) selected from alkyl sulfonate surfactants, alkyl ether sulfonate surfactants, alkyl carboxylate surfactants, alkyl ether carboxylate surfactants, alkyl sulfosuccinate surfactants, alkyl ether sulfosuccinate surfactants, glutamate surfactants, isethionate surfactants, taurate surfactants, and sarcosinate surfactants.

4. The agricultural adjuvant composition of claim 3, wherein the fatty acid (C₁-C₃)alkyl ester of the liquid medium comprises one or more compounds according to structure (I): 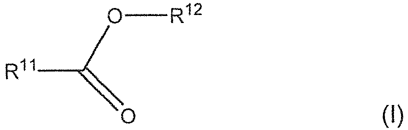 wherein:
R¹¹ is (C₆-C₂₄)alkyl or (C₆-C₂₄)alkenyl, and
R¹² is (C₁-C₃)alkyl.

5. The agricultural adjuvant composition of claim 3, wherein the composition comprises:
(b)(i) the one or more second nonionic surfactants; and
the composition comprises one or more second nonionic surfactants according to (P1).

6. The agricultural adjuvant composition of claim 3, wherein the composition comprises:
(b)(ii) one or more of the anionic surfactants; and
the composition comprises one or more anionic surfactants according to (P2).

7. The agricultural adjuvant composition of claim 1, wherein the composition comprises:
(b)(i) the one or more of the second nonionic surfactants; and
(b)(ii) the one or more of the anionic surfactants.

8. The agricultural adjuvant composition of claim 7, wherein:
(a) the one or more of the first nonionic surfactants are selected from the group consisting of fatty acid glycol ester surfactants and alkoxylated fatty alcohol surfactants;
(b)(i) the one or more of the second nonionic surfactants are selected from the group consisting of polyalkoxylated alkylphenol surfactants polyalkoxylated alkarylphenol surfactants, amine oxide surfactants, alkanolamide surfactants, and glycoside surfactants;
(b)(ii) the one or more of the anionic surfactants are selected from the group consisting of alkyl sulfonate surfactants, alkyl ether sulfonate surfactants, alkyl carboxylate surfactants, alkyl ether carboxylate surfactants, alkyl sulfosuccinate surfactants, alkyl ether sulfosuccinate surfactants, glutamate surfactants, isethionate surfactants, taurate surfactants, and sarcosinate surfactants; and
(c) the liquid medium comprises one or more compounds according to structure (I): 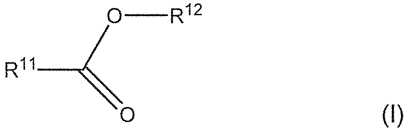 wherein:
R¹¹ is (C₆-C₂₄)alkyl or (C₆-C₂₄)alkenyl, and
R¹² is (C₁-C₃)alkyl.

9. A method for making an adjuvant composition according to claim 1, comprising the steps of:
(1) dispersing at least a portion of the one or more thickening agents (e), in the liquid medium (c) to form a thickened liquid medium,
(2) dispersing the one or more first nonionic surfactants (a) and the at least one of the one or more second nonionic surfactants (b)(i) and/or one or more anionic surfactants (b)(ii), in the thickened liquid medium, and
(3) dispersing the one or more water soluble deposition aid polymers (d) in the thickened liquid medium.

10. A method for making an aqueous pesticide composition, comprising combining the adjuvant composition according to claim 1 with water and with one or more pesticide compounds.

11. The method of claim 10, wherein the one or more pesticide compounds comprise one or more herbicide compounds selected from glyphosate, glufosinate, and their respective water soluble salts.

12. A method for controlling a target pest, comprising combining the adjuvant composition according to claim 1 with water and with one or more pesticide compounds to make an aqueous pesticide composition and applying the aqueous pesticide composition to the target pest and/or to the environment of the target pest.

13. A concentrated pesticide composition, comprising, based on 100 pbw of the composition:
(a) 0.16 pbw to 34 pbw of one or more first nonionic surfactants selected from the group consisting of fatty acid glycol ester surfactants, polyalkoxylated triglyceride surfactants, alkoxylated fatty alcohol surfactants, and sorbitan fatty acid ester surfactants;
(b) greater than 0 pbw to 15 pbw of at least one of
(b)(i) one or more second nonionic surfactants selected from the group consisting of polyalkoxylated alkylphenol surfactants, polyalkoxylated alkarylphenol surfactants, amine oxide surfactants, alkanolamide surfactants, glycoside surfactants, and/or
(b)(ii) one or more anionic surfactants;
(c) 0.25 pbw to 97.5 pbw of a liquid medium comprising one or more fatty acid (C₁-C₃)alkyl esters;
(d) greater than 0 pbw to 30 pbw of one or more water soluble deposition aid polymers selected from guars and guar derivatives;
(e) one or more thickening agents selected from silica, inorganic colloidal or colloid-forming clay particles; and
(f) 2 pbw to 90 pbw of one or more pesticide compounds.

14. A method for controlling a target pest, comprising diluting the concentrated pesticide composition of claim 13 with a liquid medium comprising water to form an aqueous end use pesticide composition and applying the aqueous end use pesticide composition to the target pest and/or to the environment of the target pest.

15. An aqueous end use pesticide composition, comprising, based on 100 pbw of the composition:
(a) 0.016 pbw to 3.4 pbw of one or more first nonionic surfactants selected from the group consisting of fatty acid glycol ester surfactants, polyalkoxylated triglyceride surfactants, alkoxylated fatty alcohol surfactants, and sorbitan fatty acid ester surfactants;
(b) greater than 0 pbw to 0.15 pbw of at least one of
(b)(i) one or more second nonionic surfactants selected from the group consisting of polyalkoxylated alkylphenol surfactants, polyalkoxylated alkarylphenol surfactants, amine oxide surfactants, alkanolamide surfactants, glycoside surfactants, and/or
(b)(ii) one or more anionic surfactants;
(c) 0.95 pbw to 9.75 pbw of a liquid medium comprising one or more fatty acid (C₁-C₃)alkyl esters;
(d) greater than 0 pbw to 0.5 pbw of one or more water soluble deposition aid polymers selected from guars and guar derivatives;
(e) one or more thickening agents selected from silica, inorganic colloidal or colloid-forming clay particles;
(f) 0.2 pbw to 9 pbw of one or more pesticide compounds; and
(g) water.

16. A method for controlling a target pest, comprising applying the aqueous end use pesticide composition of claim 15 to the target pest and/or to the environment of the target pest.

17. A method for improving the drift control properties of an aqueous end use pesticide composition, comprising:
spray applying the aqueous end use pesticide composition comprising the composition according to claim 1 to a target pest and/or to the environment of the target pest,
wherein the spray applied aqueous end use pesticide composition exhibits improved drift control compared to an analogous spray applied aqueous end use pesticide composition that lacks at least one of the surfactants (a) and (b), the liquid medium (c) and the water soluble deposition aid polymer (d).

## Patentansprüche

1. Landwirtschaftliche Hilfsmittelzusammensetzung, umfassend bezogen auf 100 Gewichtsteile der Hilfsmittelzusammensetzung:
(a) ein oder mehrere erste nichtionische Tenside, ausgewählt aus der Gruppe, bestehend aus Fettsäureglycolester-Tensiden, polyalkoxylierten Triglycerid-Tensiden, alkoxylierten Fettalkohol-Tensiden und Sorbitan-Fettsäureester-Tensiden;
(b) mindestens eines von
(b) (i) einem oder mehreren zweiten nichtionischen Tensiden, ausgewählt aus der Gruppe, bestehend aus polyalkoxylierten Alkylphenol-Tensiden, polyalkoxylierten Alkarylphenol-Tensiden, Aminoxid-Tensiden, Alkanolamid-Tensiden und Glycosid-Tensiden und/oder
(b) (ii) einem oder mehreren anionischen Tensiden, wobei das eine oder die mehreren ersten nichtionischen Tenside (a) und das eine oder die mehreren zweiten nichtionischen Tenside (b) (i) in einer kombinierten Menge von 5 Gewichtsteilen bis 30 Gewichtsteilen vorliegen;
(c) 50 Gewichtsteile bis 85 Gewichtsteile eines flüssigen Mediums, umfassend einen oder mehrere Fettsäure-(C₁-C₃)Alkylester;
(d) 1 Gewichtsteil bis 20 Gewichtsteile eines oder mehrerer wasserlöslicher Abscheidungshilfsmittelpolymere, ausgewählt aus Guaren und Guar-Derivaten; und
(e) mehr als 0 Gewichtsteile bis 10 Gewichtsteile eines oder mehrerer Verdickungsmittel, ausgewählt aus Siliciumdioxid, anorganischen kolloidalen oder kolloidbildenden Tonpartikeln.

2. Landwirtschaftliche Hilfsmittelzusammensetzung nach Anspruch 1, wobei die Zusammensetzung ein oder mehrere erste nichtionische Tenside umfasst, ausgewählt aus der Gruppe, bestehend aus Fettsäureglycolester-Tensiden und alkoxylierten Fettalkohol-Tensiden.

3. Landwirtschaftliche Hilfsmittelzusammensetzung nach Anspruch 1, wobei die Zusammensetzung ein oder mehrere erste nichtionische Tenside umfasst, ausgewählt aus alkoxylierten Rizinusöl-Tensiden und Sorbitanfettsäureester-Tensiden, und die Zusammensetzung mindestens eines der Folgenden umfasst:
(P1) ein oder mehrere zweite nichtionische Tenside (b) (i), ausgewählt aus der Gruppe, bestehend aus polyalkoxylierten Alkarylphenol-Tensiden, Aminoxid-Tensiden, Alkanolamid-Tensiden und Glycosid-Tensiden;
oder (P2) ein oder mehrere anionische Tenside (b) (ii), ausgewählt aus Alkylsulfonat-Tensiden, Alkylethersulfonat-Tensiden, Alkylcarboxylat-Tensiden, Alkylethercarboxylat-Tensiden, Alkylsulfosuccinat-Tensiden, Alkylethersulfosuccinat-Tensiden, Glutamat-Tensiden, Isethionat-Tensiden, Taurat-Tensiden und Sarcosinat-Tensiden.

4. Landwirtschaftliche Hilfsmittelzusammensetzung nach Anspruch 3, wobei der Fettsäure-(C₁-C₃)Alkylester des flüssigen Mediums eine oder mehrere Verbindungen gemäß Struktur (I) umfasst: 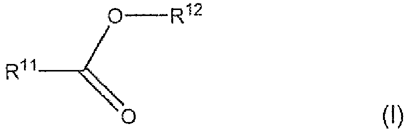 wobei:
R¹¹ (C₆-C₂₄)Alkyl oder (C₆-C₂₄)Alkenyl ist, und R¹² (C₁-C₃)Alkyl ist.

5. Landwirtschaftliche Hilfsmittelzusammensetzung nach Anspruch 3, wobei die Zusammensetzung umfasst:
(b) (i) das eine oder die mehreren zweiten nichtionischen Tenside; und
die Zusammensetzung ein oder mehrere zweite nichtionische Tenside gemäß (P1) umfasst.

6. Landwirtschaftliche Hilfsmittelzusammensetzung nach Anspruch 3, wobei die Zusammensetzung umfasst:
(b) (ii) eines oder mehrere der anionischen Tenside; und
die Zusammensetzung ein oder mehrere anionische Tenside gemäß (P2) umfasst.

7. Landwirtschaftliche Hilfsmittelzusammensetzung nach Anspruch 1, wobei die Zusammensetzung umfasst:
(b) (i) das eine oder die mehreren der zweiten nichtionischen Tenside; und
(b) (ii) das eine oder die mehreren der anionischen Tenside.

8. Landwirtschaftliche Hilfsmittelzusammensetzung nach Anspruch 7, wobei:
(a) das eine oder die mehreren der ersten nichtionischen Tenside ausgewählt sind aus der Gruppe bestehend aus Fettsäureglycolester-Tensiden und alkoxylierten Fettalkohol-Tensiden;
(b)(i) das eine oder die mehreren der zweiten nichtionischen Tenside ausgewählt sind aus der Gruppe, bestehend aus polyalkoxylierten Alkylphenol-Tensiden, polyalkoxylierten Alkarylphenol-Tensiden, Aminoxid-Tensiden, Alkanolamid-Tensiden und Glycosid-Tensiden;
(b)(ii) das eine oder die mehreren der anionischen Tenside ausgewählt sind aus der Gruppe, bestehend aus Alkylsulfonat-Tensiden, Alkylethersulfonat-Tensiden, Alkylcarboxylat-Tensiden, Alkylethercarboxylat-Tensiden, Alkylsulfosuccinat-Tensiden, Alkylethersulfosuccinat-Tensiden, Glutamat-Tensiden, Isethionattensiden Taurat-Tensiden und Sarcosinat-Tensiden; und
(c) das flüssige Medium eine oder mehrere Verbindungen gemäß Struktur (I) enthält: 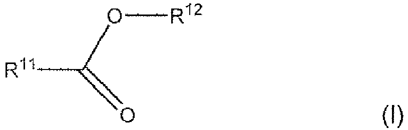 wobei:
R¹¹ (C₆-C₂₄)Alkyl oder (C₆-C₂₄)Alkenyl ist, und R¹² (C₁-C₃)Alkyl ist.

9. Verfahren zur Herstellung einer Hilfsmittelzusammensetzung nach Anspruch 1, umfassend die Schritte:
(1) Dispergieren mindestens eines Teils des einen oder der mehreren Verdickungsmittel (e) in dem flüssigen Medium (c), um ein verdicktes flüssiges Medium zu bilden,
(2) Dispergieren des einen oder der mehreren ersten nichtionischen Tenside (a) und des mindestens einen der einen oder der mehreren zweiten nichtionischen Tenside (b) (i) und/oder des einen oder der mehreren anionischen Tenside (b) (ii) in dem verdickten flüssigen Medium und
(3) Dispergieren des einen oder der mehreren wasserlöslichen Abscheidungshilfsmittelpolymere (d) in dem verdickten flüssigen Medium.

10. Verfahren zur Herstellung einer wässrigen Pestizidzusammensetzung, umfassend das Kombinieren der Hilfsmittelzusammensetzung nach Anspruch 1 mit Wasser und mit einer oder mehreren Pestizidverbindungen.

11. Verfahren nach Anspruch 10, wobei die eine oder die mehreren Pestizidverbindungen eine oder mehrere Herbizidverbindungen umfassen, ausgewählt aus Glyphosat, Glufosinat und ihren jeweiligen wasserlöslichen Salzen.

12. Verfahren zur Bekämpfung eines Zielschädlings, umfassend das Kombinieren der Hilfsmittelzusammensetzung nach Anspruch 1 mit Wasser und mit einer oder mehreren Pestizidverbindungen, um eine wässrige Pestizidzusammensetzung herzustellen, und das Aufbringen der wässrigen Pestizidzusammensetzung auf den Zielschädling und/oder auf die Umgebung des Zielschädlings.

13. Konzentrierte Pestizidzusammensetzung, umfassend, bezogen auf 100 Gewichtsteile der Zusammensetzung:
(a) 0,16 Gewichtsteile bis 34 Gewichtsteile eines oder mehrerer erster nichtionischer Tenside, ausgewählt aus der Gruppe, bestehend aus Fettsäureglycolester-Tensiden, polyalkoxylierten Triglycerid-Tensiden, alkoxylierten Fettalkohol-Tensiden und Sorbitanfettsäureester-Tensiden;
(b) mehr als 0 Gewichtsteile bis 15 Gewichtsteile von mindestens einem von
(b)(i) einem oder mehreren zweiten nichtionischen Tensiden, ausgewählt aus der Gruppe, bestehend aus polyalkoxylierten Alkylphenol-Tensiden, polyalkoxylierten Alkarylphenol-Tensiden, Aminoxid-Tensiden, Alkanolamid-Tensiden, Glycosid-Tensiden und/oder (b)(ii) einem oder mehreren anionischen Tensiden;
(c) 0,25 Gewichtsteile bis 97,5 Gewichtsteile eines flüssigen Mediums, umfassend einen oder mehrere Fettsäure-(C₁-C₃)Alkylester;
(d) mehr als 0 Gewichtsteile bis 30 Gewichtsteile eines oder mehrerer wasserlöslicher Abscheidungshilfsmittelpolymere, ausgewählt aus Guaren und Guar-Derivaten;
(e) ein oder mehrere Verdickungsmittel, ausgewählt aus Siliciumdioxid, anorganischen kolloidalen oder kolloidbildenden Tonpartikeln; und
(f) 2 Gewichtsteile bis 90 Gewichtsteile einer oder mehrerer Pestizidverbindungen.

14. Verfahren zur Bekämpfung eines Zielschädlings, umfassend das Verdünnen der konzentrierten Pestizidzusammensetzung nach Anspruch 13 mit einem flüssigen Medium, das Wasser umfasst, um eine wässrige Pestizidzusammensetzung zur Endanwendung zu bilden, und das Aufbringen der wässrigen Pestizidzusammensetzung zur Endanwendung auf den Zielschädling und/oder auf die Umwelt des Zielschädlings.

15. Wässrige Pestizidzusammensetzung zur Endanwendung, umfassend bezogen auf 100 Gewichtsteile der Zusammensetzung:
(a) 0,016 Gewichtsteile bis 3,4 Gewichtsteile eines oder mehrerer erster nichtionischer Tenside, ausgewählt aus der Gruppe, bestehend aus Fettsäureglycolester-Tensiden, polyalkoxylierten Triglycerid-Tensiden, alkoxylierten Fettalkohol-Tensiden und Sorbitan-Fettsäureester-Tensiden;
(b) mehr als 0 Gewichtsteile bis 0,15 Gewichtsteile von mindestens einem von
(b)(i) einem oder mehreren zweiten nichtionischen Tensiden, ausgewählt aus der Gruppe, bestehend aus polyalkoxylierten Alkylphenol-Tensiden, polyalkoxylierten Alkarylphenol-Tensiden, Aminoxid-Tensiden, Alkanolamid-Tensiden, Glycosid-Tensiden und/oder (b)(ii) einem oder mehreren anionischen Tensiden;
(c) 0,95 Gewichtsteile bis 9,75 Gewichtsteile eines flüssigen Mediums, umfassend einen oder mehrere Fettsäure-(C₁-C₃)Alkylester;
(d) mehr als 0 Gewichtsteile bis 0,5 Gewichtsteile eines oder mehrerer wasserlöslicher Abscheidungshilfsmittelpolymere, ausgewählt aus Guaren und Guar-Derivaten;
(e) ein oder mehrere Verdickungsmittel, ausgewählt aus Siliciumdioxid, anorganischen kolloidalen oder kolloidbildenden Tonpartikeln;
(f) 0,2 Gewichtsteile bis 9 Gewichtsteile einer oder mehrerer Pestizidverbindungen; und
(g) Wasser.

16. Verfahren zur Bekämpfung eines Zielschädlings, umfassend das Aufbringen der wässrigen Pestizidzusammensetzung zur Endanwendung nach Anspruch 15 auf den Zielschädling und/oder auf die Umgebung des Zielschädlings.

17. Verfahren zur Verbesserung der Driftkontrolleigenschaften einer wässrigen Pestizidzusammensetzung zur Endanwendung, umfassend:
das Aufbringen durch Besprühen der wässrigen Pestizidzusammensetzung zur Endanwendung, die die Zusammensetzung nach Anspruch 1 umfasst, auf einen Zielschädling und/oder auf die Umgebung des Zielschädlings, wobei die durch Besprühen aufgebrachte wässrige Pestizidzusammensetzung zur Endanwendung eine verbesserte Driftkontrolle im Vergleich zu einer analogen durch Besprühen aufgebrachten wässrigen Pestizidzusammensetzung zur Endanwendung aufweist, der mindestens eines von den Tensiden (a) und (b), dem flüssigen Medium (c) und dem wasserlöslichen Abscheidungshilfspolymer (d) fehlt.

## Revendications

1. Composition d'adjuvant agricole, comprenant, sur la base de 100 parties en poids de la composition d'adjuvant :
(a) au moins un premier tensioactif non ionique choisi dans le groupe constitué de tensioactifs à base d'ester de glycol d'acide gras, de tensioactifs à base de triglycérides polyalcoxylés, de tensioactifs à base d'alcool gras alcoxylé, et de tensioactifs à base d'ester d'acide gras de sorbitane ;
(b) au moins l'un parmi
(b)(i) au moins un second tensioactif non ionique choisi dans le groupe constitué de tensioactifs à base d'alkylphénol polyalcoxylé, de tensioactifs à base d'alkarylphénol polyalcoxylé, de tensioactifs à base d'oxyde d'amine, de tensioactifs à base d'alcanolamide, et de tensioactifs à base de glycoside, et/ou
(b)(ii) au moins un tensioactif anionique, dans laquelle l'au moins un premier tensioactif non ionique (a) et l'au moins un second tensioactif non ionique (b)(i) sont présents en une quantité combinée comprise entre 5 parties en poids et 30 parties en poids ;
(c) entre 50 parties en poids et 85 parties en poids d'un milieu liquide comprenant au moins un ester (C₁-C₃)alkylique d'acide gras ;
(d) entre 1 partie en poids et 20 parties en poids d'au moins un polymère d'aide au dépôt hydrosoluble choisi parmi les guars et les dérivés de guar ; et
(e) plus de 0 partie en poids à 10 parties en poids d'au moins un agent épaississant choisi parmi la silice, des particules d'argile colloïdales inorganiques ou formant un colloïde.

2. Composition d'adjuvant agricole selon la revendication 1, dans laquelle la composition comprend au moins un premier tensioactif non ionique choisi dans le groupe constitué de tensioactifs à base d'ester de glycol d'acide gras et de tensioactifs à base d'alcool gras alcoxylé.

3. Composition d'adjuvant agricole selon la revendication 1, dans laquelle la composition comprend au moins un premier tensioactif non ionique choisi parmi les tensioactifs à base d'huile de ricin alcoxylée et les tensioactifs à base d'ester d'acide gras de sorbitane, et la composition comprend au moins l'un parmi :
(P1) au moins un second tensioactif non ionique (b)(i) choisi dans le groupe constitué de de tensioactifs à base d'alkarylphénol polyalcoxylé, de tensioactifs à base d'oxyde d'amines, de tensioactifs à base d'alcanolamide, et de tensioactifs à base de glycoside ;
ou (P2) au moins un tensioactif anionique (b)(ii) choisi parmi les tensioactifs à base de sulfonate d'alkyle, les tensioactifs à base de sulfonate d'éther alkylique, les tensioactifs à base de carboxylate d'alkyle, les tensioactifs à base de carboxylate d'éther alkylique, les tensioactifs à base de sulfosuccinate d'alkyle, les tensioactifs à base de sulfosuccinate d'éther alkylique, les tensioactifs à base de glutamate, les tensioactifs à base d'iséthionate, les tensioactifs à base de taurate, et les tensioactifs à base de sarcosinate.

4. Composition d'adjuvant agricole selon la revendication 3, dans laquelle l'ester (C₁-C₃)alkylique d'acide gras du milieu liquide comprend au moins un composé répondant à la structure (I) : 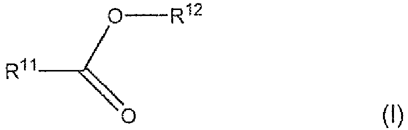 dans laquelle :
R¹¹ représente un groupe (C₆-C₂₄)alkyle ou (C₆-C₂₄)alcényle, et
R¹² représente un groupe (C₁-C₃)alkyle.

5. Composition d'adjuvant agricole selon la revendication 3, dans laquelle la composition comprend :
(b)(i) l'au moins un second tensioactif non ionique ; et
la composition comprend au moins un second tensioactif non ionique conformément à (P1).

6. Composition d'adjuvant agricole selon la revendication 3, dans laquelle la composition comprend :
(b)(ii) au moins un des tensioactifs anioniques ; et
la composition comprend au moins un tensioactif anionique conformément à (P2).

7. Composition d'adjuvant agricole selon la revendication 1, dans laquelle la composition comprend :
(b)(i) l'au moins un des seconds tensioactifs non ioniques ; et
(b)(ii) l'au moins un des tensioactifs anioniques.

8. Composition d'adjuvant agricole selon la revendication 7, dans laquelle :
(a) l'au moins un des premiers tensioactifs non ioniques est choisi dans le groupe constitué de tensioactifs à base d'ester de glycol d'acide gras et de tensioactifs à base d'alcool gras alcoxylé ;
(b)(i) l'au moins un des seconds tensioactifs non ioniques est choisi dans le groupe constitué de tensioactifs à base d'alkylphénol polyalcoxylé, de tensioactifs à base d'alkarylphénol polyalcoxylé, de tensioactifs à base d'oxyde d'amine, de tensioactifs à base d'alcanolamide, et de tensioactifs à base de glycoside ;
(b)(ii) l'au moins un des tensioactifs anioniques est choisi dans le groupe constitué de tensioactifs à base de sulfonate d'alkyle, de tensioactifs à base de sulfonate d'éther alkylique, de tensioactifs à base de carboxylate d'alkyle, de tensioactifs à base de carboxylate d'éther alkylique, de tensioactifs à base de sulfosuccinate d'alkyle, de tensioactifs à base de sulfosuccinate d'éther alkylique, de tensioactifs à base de glutamate, de tensioactifs à base d'iséthionate, de tensioactifs à base de taurate, et de tensioactifs à base de sarcosinate ; et
(c) le milieu liquide comprend au moins un composé répondant à la structure (I) : 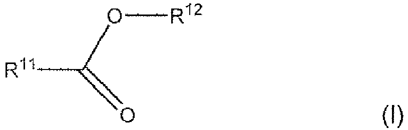 dans laquelle :
R¹¹ représente un groupe (C₆-C₂₄)alkyle ou (C₆-C₂₄)alcényle, et R¹² représente un groupe (C₁-C₃)alkyle.

9. Procédé de préparation d'une composition d'adjuvant selon la revendication 1, comprenant les étapes de :
(1) dispersion d'au moins une partie de l'au moins un agent épaississant (e), dans le milieu liquide (c) afin de former un milieu liquide épaissi,
(2) dispersion de l'au moins un premier tensioactif non ionique (a) et de l'au moins l'un parmi l'au moins un second tensioactif non ionique (b)(i) et/ou de l'au moins un tensioactif anionique (b)(ii), dans le milieu liquide épaissi, et
(3) dispersion de l'au moins un polymère d'aide au dépôt hydrosoluble (d) dans le milieu liquide épaissi.

10. Procédé de préparation d'une composition pesticide aqueuse, comprenant la combinaison de la composition d'adjuvant selon la revendication 1 avec de l'eau et avec au moins un composé pesticide.

11. Procédé selon la revendication 10, dans lequel l'au moins un composé pesticide comprend au moins un composé herbicide choisi parmi le glyphosate, le glufosinate, et leurs sels hydrosolubles respectifs.

12. Procédé de commande d'un nuisible cible, comprenant la combinaison de la composition d'adjuvant selon la revendication 1 avec de l'eau et avec au moins un composé pesticide afin de préparer une composition pesticide aqueuse et l'application de la composition pesticide aqueuse sur le nuisible cible et/ou dans l'environnement du nuisible cible.

13. Composition pesticide concentrée, comprenant, sur la base de 100 parties en poids de la composition :
(a) entre 0,16 parties en poids et 34 parties en poids d'au moins un premier tensioactif non ionique choisi dans le groupe constitué de tensioactifs à base d'ester de glycol d'acide gras, de tensioactifs à base de triglycérides polyalcoxylés, de tensioactifs à base d'alcool gras alcoxylé, et de tensioactifs à base d'ester d'acide gras de sorbitane ;
(b) plus de 0 partie en poids à 15 parties en poids d'au moins l'un parmi
(b)(i) au moins un second tensioactif non ionique choisi dans le groupe constitué de tensioactifs à base d'alkylphénol polyalcoxylé, de tensioactifs à base d'alkarylphénol polyalcoxylé, de tensioactifs à base d'oxyde d'amine, de tensioactifs à base d'alcanolamide, de tensioactifs à base de glycoside, et/ou (b)(ii) au moins un tensioactif anionique ;
(c) entre 0,25 parties en poids et 97,5 parties en poids d'un milieu liquide comprenant au moins un ester (C₁-C₃)alkylique d'acide gras ;
(d) plus de 0 partie en poids à 30 parties en poids d'au moins un polymère d'aide au dépôt hydrosoluble choisi parmi les guars et les dérivés de guar ;
(e) au moins un agent épaississant choisi parmi la silice, des particules d'argile colloïdales inorganiques ou formant un colloïde ; et
(f) entre 2 parties en poids et 90 parties en poids d'au moins un composé pesticide.

14. Procédé permettant de commander un nuisible cible, comprenant la dilution de la composition de pesticide concentré de la revendication 13 avec un milieu liquide comprenant de l'eau afin de former une composition pesticide aqueuse pour une utilisation finale et l'application de la composition pesticide aqueuse pour une utilisation finale sur le nuisible cible et/ou dans l'environnement du nuisible cible.

15. Composition pesticide aqueuse pour une utilisation finale, comprenant, sur la base de 100 parties en poids de la composition :
(a) entre 0,016 parties en poids et 3,4 parties en poids d'au moins un premier tensioactif non ionique choisi dans le groupe constitué de tensioactifs à base d'ester de glycol d'acide gras, de tensioactifs à base de triglycérides polyalcoxylés, de tensioactifs à base d'alcool gras alcoxylé, et de tensioactifs à base d'ester d'acide gras de sorbitane ;
(b) plus de 0 partie en poids à 0,15 parties en poids d'au moins l'un parmi
(b)(i) au moins un second tensioactif non ionique choisi dans le groupe constitué de tensioactifs à base d'alkylphénol polyalcoxylé, de tensioactifs à base d'alkarylphénol polyalcoxylé, de tensioactifs à base d'oxyde d'amine, de tensioactifs à base d'alcanolamide, de tensioactifs à base de glycoside, et/ou (b)(ii) au moins un tensioactif anionique ;
(c) entre 0,95 parties en poids et 9,75 parties en poids d'un milieu liquide comprenant au moins un ester (C₁-C₃)alkylique d'acide gras ;
(d) plus de 0 partie en poids à 0,5 parties en poids d'au moins un polymère d'aide au dépôt hydrosoluble choisi parmi les guars et les dérivés de guar ;
(e) au moins un agent épaississant choisi parmi la silice, des particules d'argile colloïdales inorganiques ou formant un colloïde ;
(f) entre 0,2 parties en poids et 9 parties en poids d'au moins un composé pesticide ; et
(g) de l'eau.

16. Procédé permettant de commander un nuisible cible, comprenant l'application de la composition pesticide aqueuse pour une utilisation finale de la revendication 15 sur le nuisible cible et/ou dans l'environnement du nuisible cible.

17. Procédé d'amélioration des propriétés de commande de dérive d'une composition pesticide aqueuse pour une utilisation finale, comprenant :
l'application par pulvérisation de la composition pesticide aqueuse pour une utilisation finale comprenant la composition selon la revendication 1 sur le nuisible cible et/ou dans l'environnement du nuisible cible, dans lequel la composition pesticide aqueuse pour une utilisation finale appliquée par pulvérisation présente un contrôle amélioré de dérive par rapport à une composition pesticide aqueuse pour une utilisation finale appliquée par pulvérisation analogue qui n'a pas au moins l'un parmi les tensioactifs (a) et (b), le milieu liquide (c) et le polymère d'aide au dépôt hydrosoluble (d).
